# EUROPÄISCHE PATENTSCHRIFT

(11) **EP 2 286 551 B1**
(45) Veröffentlichungstag und Bekanntmachung des Hinweises auf die Patenterteilung: **06.01.2016**
(21) Anmeldenummer: 09753963.9
(22) Anmeldetag: 29.05.2009
(51) Int. Cl.: H04L 12/403, H04L 7/00

(54) **SERIAL-PERIPHERAL-INTERFACE-SCHNITTSTELLE MIT VERMINDERTER VERBINDUNGSLEITUNGSANZAHL**
SERIAL-PERIPHERAL INTERFACE WITH REDUCED NUMBER OF CONNECTION LINES
INTERFACE DE TYPE SERIAL PERIPHERAL INTERFACE (INTERFACE DE PÉRIPHÉRIQUE SÉRIE) À NOMBRE RÉDUIT DE LIGNES DE CONNEXION

(30) Priorität: 30.05.2008 DE 102008026076; 21.11.2008 DE 102008058554; 21.11.2008 DE 102008058555; 23.12.2008 DE 102008062865
(43) Veröffentlichungstag der Anmeldung: 23.02.2011
(60) Teilanmeldung: 13176826.9
(73) Patentinhaber: Continental Teves AG & Co. OHG, 60488 Frankfurt (DE)
(72) Erfinder: PEICHEL, Thomas, 61206 Wöllstadt (DE); EHRENBERG, Thorsten, 61231 Bad Nauheim (DE); SCHRIEFER, Jörn, 64347 Griesheim (DE)
(86) Internationale Anmeldenummer: PCT/EP2009/056650
(87) Internationale Veröffentlichungsnummer: WO 2009/144308

(56) Entgegenhaltungen:
- WO-A1-2007/144412
- WO-A2-2006/044140
- DE-A1- 10 329 707
- DE-A1- 19 702 270
- DE-A1-102005 014 783
- US-A- 4 689 740
- US-A1- 2008 075 128

## Beschreibung

Die Erfindung betrifft ein elektronisches Kommunikationssystem gemäß Oberbegriff von Anspruch 1, ein Verfahren zur Datenübertragung zwischen zumindest einer ersten Kommunikationseinheit und wenigstens einer zweiten Kommunikationseinheit sowie die Verwendung des Kommunikationssystems in Kraftfahrzeugen.

Unter dem Namen "Serial Peripheral Interface" ist ein Serieller-Datenbus-Standard bekannt, welcher eine bidirektionale, synchrone und serielle Datenübertragung zwischen einer Mastereinheit und verschiedenen Slaveeinheiten zulässt. Dabei umfasst ein entsprechendes Kommunikationssystem allerdings wenigstens drei Leitungen zwischen der Mastereinheit und einer ersten Slaveeinheit für eine bidirektionale Datenübertragung, nämlich zwei Datenleitungen und eine Taktleitung. Bei mehreren Slaveeinheiten benötigt jede dieser Einheiten eine zusätzliche Selektleitung zur Mastereinheit.

In diesem Zusammenhang beschreibt die WO 2007/144412 ein Verfahren zum Übertragen von Messdaten von einer Sensoreinrichtung an eine Steuerungseinrichtung. Die Sensoreinrichtung und die Steuerungseinrichtung sind dabei über einen Datenbus verbunden, beispielsweise über einen CAN-Bus. Die Steuerungseinrichtung sendet Synchronisierungsbotschaften an die Sensoreinrichtung, wobei der Empfang einer Synchronisierungsbotschaft bzw. der Empfang mehrerer Synchronisierungsbotschaften nach einem vorgegebenen zeitlichen Muster durch die Sensoreinrichtung diese - je nach zeitlichem Muster - in einen Synchronmodus bzw. Asynchronmodus versetzt. Im Synchronmodus sendet nun die Sensoreinrichtung Datennachrichten synchron zum Empfang der Synchronisierungsbotschaften an die Steuerungseinrichtung, d.h., die Sensoreinrichtung sendet die Datennachrichten mit einem festen zeitlichen Abstand zum Empfang der Synchronisierungsbotschaften. Somit wird es ermöglicht der Steuerungseinrichtung die Datennachrichten angepasst an deren Loop-Zeiten zuzuführen.

Aus der US 4 689 740 ist ein System zur Datenübertragung bekannt, welches eine Anzahl von Kommunikationsstationen umfasst, die jeweils mittels einer Taktsignalleitung und einer Datenübertragungsleitung verbunden sind. Die Taktsignalleitung dient zur Übertragung des Taktsignals, während die Datenübertragungsleitung der eigentlichen Datenübertragung dient. Die US 4 689 740 beschreibt dabei eine Möglichkeit der bitsynchronen Datenübertragung, wobei der jeweils als Master fungierende Kommunikationsteilnehmer über die Taktsignalleitung kontinuierlich ein Taktsignal vorgibt. Um das Senden von Daten durch einen Slave zu veranlassen, sendet der Master ein Datenaufforderungssignal, welches gleichzeitig über die Taktsignalleitung und die Datenübertragungsleitung dargestellt wird. Wenn ein Slave das Datenaufforderungssignal empfängt, beginnt dieser mit der bitsynchronen Datenübertragung. Eine Änderung des Pegels der Datenübertragungsleitung durch den Slave ist dabei jeweils nur zu Zeitpunkten möglich, an denen der Master über die Taktsignalleitung eine "0" sendet.

Die Erfindung hat sich die Ausgabe gestellt, ein Kommunikationssystem und ein Verfahren zur Datenübertragung vorzuschlagen, welches relativ kostengünstig ist und/oder mit relativ wenigen Verbindungsleitungen realisierbar ist.

Diese Aufgabe wird erfindungsgemäß gelöst durch das elektronische Kommunikationssystem gemäß Anspruch 1 und das Verfahren gemäß Anspruch 16.

Die erste Kommunikationseinheit und zumindest die zweite Kommunikationseinheit sind bevorzugt über die erste Datenleitung als einzige Datenleitung miteinander verbunden.

Die relativ geringe Anzahl an Leitungen, insbesondere Datenleitungen, besonders bevorzugt einer einzigen Datenleitung, aufgrund des erfindungsgemäßen Datenübertragungsprotokolls ermöglicht signifikante Kosteneinsparungen gegenüber Kommunikationssystemen mit mehreren Datenleitungen.

Unter einer Übertragung eines Datensignals und/oder eines anderen Signals über eine Leitung, insbesondere über die erste Datenleitung, wird vorzugsweise ein Senden des Signals über die Leitung und/oder ein Anlegen des Signals an die Leitung verstanden.

Unter einem Taktsignal wird bevorzugt ein Clocksignal verstanden und unter einer Taktgebereinheit eine Clock bzw. Clockeinheit.

Das Datenübertragungsprotokoll ist vorzugsweise so ausgebildet, dass das Datensignal der zweiten Kommunikationseinheit bezüglich des ersten Datenübertragungsmodus eine definierte Anzahl an Bits umfasst, insbesondere genau ein Bit.

Es ist bevorzugt, dass das Datenübertragungsprotokoll bezüglich des ersten Datenübertragungsmodus so ausgebildet ist, dass eine Botschaft, welche insbesondere wenigstens eine definierte, separat interpretierbare Information umfasst, der zweiten Kommunikationseinheit an die erste Kommunikationseinheit mehrere Datensignale umfasst. Besonders bevorzugt umfasst diese Botschaft genau eine Information.

Unter einer Botschaft wird beispielsweise ein codierter Wert einer durch ein Sensorelement erfassten physikalischen Größe oder ein Betriebsparameter eines Sensors oder Aktors verstanden.

Das Datenübertragungsprotokoll ist zumindest bezüglich des ersten Datenübertragungsmodus bevorzugt so ausgebildet, dass das Taktsignal der ersten Kommunikationseinheit und das Datensignal der zweiten Kommunikationseinheit im Wesentlichen gleichzeitig über die erste Datenleitung übertragen werden.

Es ist zweckmäßig, dass die erste Kommunikationseinheit und zumindest die zweite Kommunikationseinheit über eine zusätzliche Masseleitung bzw. eine Bezugspotentialleitung und/oder über eine zusätzliche Energieversorgungsleitung miteinander verbunden sind. Besonders bevorzugt wird außerdem die erste Datenleitung zusätzlich auch als Energieversorgungsleitung genutzt, was im Folgenden als Zwei-Draht-Schnittstelle bezeichnet wird.

Es ist bevorzugt, dass das Datenübertragungsprotokoll zumindest bezüglich des ersten Datenübertragungsmodus so ausgebildet ist, dass das Datensignal als Ausgangssignal der zweiten Kommunikationseinheit und das Taktsignal oder das Datenanforderungssignal der ersten Kommunikationseinheit auf der ersten Datenleitung überlagert werden oder dass das Datensignal der zweiten Kommunikationseinheit das Taktsignal oder das Datenanforderungssignal der ersten Kommunikationseinheit auf der ersten Datenleitung übersteuert, wobei das Datensignal insbesondere den Signalwert auf der ersten Datenleitung bestimmt.

Vorzugsweise weist wenigstens die zweite Kommunikationseinheit keine eigene Taktgebereinheit auf oder sie weist eine Taktgebereinheit auf, welche nicht synchron zu einer Taktgebereinheit der ersten Kommunikationseinheit arbeitet und/oder welche im Vergleich zur Taktgebereinheit der ersten Kommunikationseinheit eine geringere Taktpräzision bzw. größere Taktschwankungen aufweist.

Die zweite Kommunikationseinheit ist bevorzugt so ausgebildet, dass ihre Antwortzeit auf das Datenanforderungssignal oder das Taktsignal der ersten Kommunikationseinheit innerhalb eines definierten Zeitintervalls liegt, welches insbesondere kleiner bzw. kürzer ist als die Periodendauer oder ein Vielfaches der Periodendauer des Taktsignals der ersten Kommunikationseinheit und/oder des Takts der Taktgebereinheit der ersten Kommunikationseinheit. Besonders bevorzugt ist wenigstens die zweite Kommunikationseinheit bzw. eine erste Slaveeinheit so ausgebildet, dass diese eine garantierte Antwortzeit auf wenigstens ein definiertes Signal der ersten Kommunikationseinheit aufweist und dadurch echtzeitfähig ist.

Die erste Kommunikationseinheit weist vorzugsweise einen Datenausgang bzw. Datenausgangsanschluss auf, welcher mit der ersten Datenleitung direkt oder indirekt verbunden ist, wobei an diesem Datenausgang bzw. Datenausgangsanschluss das Taktsignal oder Datenanforderungssignal der ersten Kommunikationseinheit bereitgestellt bzw. angelegt wird.

Das Kommunikationssystem ist bevorzugt als modifiziertes Serial-Peripheral-Interface-Kommunikationssystem mit verminderter Leitungszahl ausgebildet, insbesondere mit genau einer Informationsübertragungsleitung, wobei wenigstens die erste Kommunikationseinheit und/oder zumindest die zweite Kommunikationseinheit im Wesentlichen einem Serial-Peripheral-Interface-Standard genügend ausgebildet sind. Die erste Kommunikationseinheit weist diesbezüglich insbesondere wenigstens einen Datenanschluss und einen Taktanschluss auf, welche taktsynchron betrieben werden bzw. welche einer gemeinsamen Taktgebereinheit zugeordnet sind. Alternativ weist die erste Kommunikationseinheit zwei Datenanschlüsse auf, von denen ein Datenanschluss als Dateneingang und ein Datenanschluss als Datenausgang betrieben wird, wobei die Datenanschlüsse synchron zueinander betrieben werden. Die erste Kommunikationseinheit weist besonders bevorzugt einen Datenausgang und einen Dateneingang auf, wobei diese gemeinsam direkt oder indirekt mit der ersten Datenleitung verbunden sind.

Das Kommunikationssystem weist vorzugsweise zumindest eine Umschalteinheit auf, die so ausgebildet und angeschlossen ist, dass mit ihr zwischen einem Betrieb ohne separate Taktleitung zumindest zwischen erster und zweiter Kommunikationseinheit und einem Betrieb gemäß dem Serial-Peripheral-Interface-Standard mit separater Taktleitung wenigstens zwischen erster und zweiter Kommunikationseinheit umgeschaltet werden kann. Die Umschalteinheit wird insbesondere durch die erste Kommunikationseinheit angesteuert, wobei diese besonders bevorzugt einen zusätzlichen Umschaltanschluss aufweist und dieser Umschaltanschluss ganz besonders bevorzugt mit der Umschaltleitung über wenigstens eine Verbindungsleitung verbunden ist.

Das Datenübertragungsprotokoll ist zweckmäßigerweise so ausgebildet, dass die erste Kommunikationseinheit in einem zweiten Datenübertragungsmodus ein Datensignal und ein Datenanforderungssignal oder Taktsignal im Wesentlichen gleichzeitig und/oder das Taktsignal eingebettet in das Datensignal und/oder ein gemeinsames Daten-Taktsignal über die erste Datenleitung zumindest an die zweite Kommunikationseinheit überträgt.

Es ist bevorzugt, dass das Datenübertragungsprotokoll so ausgebildet ist, dass ein, insbesondere jeweiliger, definierter Kommunikationsvorgang das Übertragen eines Synchronisationspakets und/oder eines Identifikationspakets und/oder eines Kommandopakets und/oder eines Adresspakets von der ersten Kommunikationseinheit an zumindest die zweite Kommunikationseinheit über die erste Datenleitung umfasst.

Die erste Kommunikationseinheit und/oder die zweite Kommunikationseinheit weisen vorzugsweise eine Push-Pull-Stufe mit einem High-Side-Treiber und einem Low-Side-Treiber oder einen High-Side-Treiber mit einem optionalen Pull-Down-Widerstand oder einen Low-Side-Treiber mit einem optionalen Pull-Up-Widerstand auf. Insbesondere weisen jeweils die erste und die zweite Kommunikationseinheit eine Push-Pull-Stufe, welche bevorzugt auch als Gegentaktstufe bezeichnet wird, zum Anlegen eines jeweiligen Ausgangssignals an die erste Datenleitung auf. Unter einem High-Side-Treiber wird dabei besonders bevorzugt eine elektronische Schaltung verstanden, welche ein aktiv geschaltetes "High"-Signal an die erste Datenleitung anlegt und/oder eine elektrische Größe auf der ersten Datenleitung auf einen definierten "High"-Wert einstellt. Unter einem Low-Side-Treiber wird dabei besonders bevorzugt entsprechend eine elektronische Schaltung zur Einstellung eines aktiv geschalteten "Low"-Signals bzw. "Low"-Signalwertes bzw. ein Anlegen eines elektrischen Potentials, im Wesentlichen entsprechend eines Massepotentials, verstanden.

Es ist bevorzugt, dass die erste und wenigstens die zweite Kommunikationseinheit sowie das Datenübertragungsprotokoll so ausgebildet sind, dass das Datensignal und/oder das Datenanforderungssignal oder das Taktsignal über definierte Strom- und/oder Spannungswerte oder durch optische Datenübertragung auf der ersten Datenleitung übertragen werden. Dabei ist vorgesehen, dass das Datensignal und/oder das Datenanforderungssignal oder das Taktsignal mittels einer definierten Signalform, umfassend mindestens eine definierte Signalflanke und/oder wenigstens einen Signalimpuls und/oder zumindest eine Signalimpulspause, codiert sind.

Es ist zweckmäßig, dass die erste Kommunikationseinheit als Mastereinheit und die zweite Kommunikationseinheit als Slaveeinheit ausgebildet sind und insbesondere das Datenübertragungsprotokoll so ausgebildet ist, dass der erste Datenübertragungsmodus als Slave-Sende-Datenübertragungsmodus ausgelegt ist und/oder der zweite Datenübertragungsmodus als Master-Sende-Datenübertragungsmodus.

Die erste Kommunikationseinheit ist vorzugsweise mit wenigstens der zweiten Kommunikationseinheit über eine Zwei-Draht-Schnittstelle verbunden, über welche unidirektional oder bidirektional Informationen, insbesondere stromcodiert, übertragen werden. Insbesondere wird dabei die zweite Kommunikationseinrichtung über diese Zwei-Draht-Schnittstelle mit elektrischer Energie versorgt.

Die zweite Kommunikationseinheit ist zweckmäßigerweise so ausgebildet, dass sie ein Identifikationspaket und/oder ein Kommandopaket und/oder ein Adresspaket und/oder ein Endungspaket der ersten Kommunikationseinheit empfangen und selbstständig interpretieren kann.

Es ist bevorzugt, dass zumindest die zweite Kommunikationseinheit so ausgebildet ist, dass sie das Identifikationspaket bezüglich einer Auswahl aus mindestens zwei definierten Zugriffsverfahren interpretiert und sich nach dieser Interpretation selbstständig in einen definierten Betriebsmodus versetzt und/oder eine definierte Antwort an die erste Kommunikationseinheit überträgt, insbesondere gemäß des ersten Datenübertragungsmodus, und/oder eine interne Aktivität selbsttätig veranlasst und ausführt, wobei diese interne Aktivität insbesondere das Speichern eines definierten Datums oder mehrerer definierter Daten an einer oder mehreren definierten Speicheradressen umfasst.

Die zweite Kommunikationseinheit ist vorzugsweise in eine Sensor- und/oder Aktoreinheit integriert.

Das Kommunikationssystem umfasst zweckmäßigerweise mehrere "Slave"-Kommunikationseinheiten, welche jeweils im Wesentlichen entsprechend der zweiten Kommunikationseinheit ausgebildet sind und insbesondere jeweils mittels einer einzigen Datenleitung mit der ersten Kommunikationseinheit verbunden sind.

Das Verfahren wird bevorzugt weitergebildet, indem das Datensignal der zweiten Kommunikationseinheit bezüglich des ersten Datenübertragungsmodus eine definierte Anzahl an Bits umfasst, insbesondere genau ein Bit.

Zumindest bezüglich des ersten Datenübertragungsmodus werden zweckmäßigerweise das Taktsignal der ersten Kommunikationseinheit und das Datensignal der zweiten Kommunikationseinheit im Wesentlichen gleichzeitig über die erste Datenleitung übertragen.

Es ist bevorzugt, dass die zweite Kommunikationseinheit das Datensignal als Antwort auf das Datenanforderungssignal oder das Taktsignal der ersten Kommunikationseinheit innerhalb eines definierten Zeitintervalls sendet, welches insbesondere kleiner ist als die Periodendauer oder ein Vielfaches der Periodendauer des Taktsignals der ersten Kommunikationseinheit und/oder des Takts einer Taktgebereinheit der ersten Kommunikationseinheit.

Es ist zweckmäßig, dass die erste Kommunikationseinheit in einem zweiten Datenübertragungsmodus ein Datensignal und ein Datenanforderungssignal/Taktsignal im Wesentlichen gleichzeitig und/oder das Taktsignal eingebettet in das Datensignal und/oder ein gemeinsames Daten-Taktsignal über die erste Datenleitung zumindest an die zweite Kommunikationseinheit überträgt.

Die erste Kommunikationseinheit überträgt bevorzugt zu Beginn eines definierten, insbesondere in sich abgeschlossenen, Kommunikationsvorgangs mit zumindest der zweiten Kommunikationseinheit ein Synchronisationspaket über die erste Datenleitung wenigstens an die zweite Kommunikationseinheit.

Alternativ vorzugsweise oder insbesondere zusätzlich überträgt die zweite Kommunikationseinheit zu Beginn eines eigenen Sendevorgangs ein Synchronisationspaket zumindest an die erste Kommunikationseinheit.

Unter einem Synchronisationspaket wird zweckmäßigerweise ein eindeutig identifizierbar ausgebildetes Signal und/oder eine entsprechende Signal-/Datenfolge verstanden, die so ausgebildet ist, dass aus ihrem Auftreten bzw. dem jeweiligen Empfangszeit- oder Sendezeitpunkt oder ihrer Ausbildung eine Synchronisationsinformation gewonnen werden kann, mittels derer zumindest eine Kommunikationseinheit ihre eigene Kommunikation mit der anderen Kommunikationseinheit, von welcher das Synchronisationspaket stammt, synchronisieren kann.

Es ist bevorzugt, dass in einem definierten Kommunikationsvorgang, insbesondere anschließend, ein Synchronisationspaket und/oder ein Identifikationspaket und/oder ein Kommandopaket und/oder ein Adresspaket von der ersten Kommunikationseinheit an zumindest die zweite Kommunikationseinheit über die erste Datenleitung übertragen wird. Mittels des Identifikationspakets kann die erste Kommunikationseinheit insbesondere jederzeit die Kommunikationsteilnehmer auswählen. Mittels des Sendens eines Synchronisationspakets kann insbesondere jederzeit ein neuer Kommunikationsvorgang eingeleitet werden. Außerdem kann durch das Synchronisationspaket die Datenübertragungsgeschwindigkeit/-rate angepasst werden. Durch das Identifikationspaket kann beispielsweise die spezifische Auswahl von Kommunikationsteilnehmern innerhalb eines Kommunikationsvorgangs definiert werden.

Am Ende eines definierten Kommunikationsvorgang wird zweckmäßigerweise ein Endungspaket übertragen, welches insbesondere eine Prüfsumme umfasst, damit eine fehlerhaft übertragene Botschaft identifiziert werden kann.

Es ist zweckmäßig, dass in einem definierten Kommunikationsvorgang zusätzlich, insbesondere anschließend, eine Botschaft von der ersten Kommunikationseinheit an die zweite Kommunikationseinheit gemäß dem zweiten Datenübertragungsmodus und/oder eine Botschaft von der zweiten Kommunikationseinheit an die erste Kommunikationseinheit, gemäß dem ersten Datenübertragungsmodus, über die erste Datenleitung übertragen wird.

Es ist bevorzugt, dass das Synchronisationspaket ein eindeutig identifizierbares Startblocksignal umfasst, welches insbesondere eine Start-Impulspause definierter Länge und einen Start-Impuls definierter Länge aufweist und/oder ein Start-Impuls-Start-Impulspausen-Signal aufweist, wobei das Zeitdauerverhältnis von Start-Impuls zu Start-Impulspause eine definierte, insbesondere eindeutig identifizierbare, Größe aufweist und/oder welches eine eindeutig identifizierbare Folge von Start-Impulsen und Start-Impulspausen mit jeweils definierter Dauer aufweist. Besonders bevorzugt ermittelt wenigstens die zweite Kommunikationseinheit aus dem eindeutig identifizierbaren Startblocksignal eine Taktreferenzgröße und führt ganz besonders bevorzugt anschließend mittels dieser Taktreferenzgröße eine Anpassung des eigenen definierten Datenanforderungssignal/Taktsignal-Antwortsignal-Zeitintervalls bzw. eine Anpassung der eigenen Antwortzeit durch.

Es ist zweckmäßig, dass das Identifikationspaket eine Information bezüglich einer Auswahl aus mindestens zwei definierten Zugriffsverfahren umfasst, welche die zweite Kommunikationseinheit interpretiert und sich anschließend selbst in einen definierten Betriebsmodus versetzt und/oder wonach die zweite Kommunikationseinheit eine definierte Antwort an die erste Kommunikationseinheit überträgt, insbesondere gemäß des ersten Datenübertragungsmodus, und/oder eine interne Aktivität selbsttätig veranlasst und ausführt, wobei diese interne Aktivität insbesondere das Speichern eines definierten Datums oder mehrerer definierter Daten an einer oder mehreren definierten Speicheradressen umfasst.

Das Identifikationspaket umfasst bevorzugt eine Information, ob der aktuelle Kommunikationsvorgang sämtliche weiteren Kommunikationseinheiten ("broadcast message"), insbesondere alle mit der sendenden Kommunikationseinheit verbundenen Slave-Einheiten, eine oder mehrere einzelne Kommunikationseinheiten, beispielsweise lediglich die zweite Kommunikationseinheit betrifft und diese weitere Informationen zu erwarten haben oder ob eine oder mehrere oder sämtliche weiteren Kommunikationseinheiten eine oder mehrere definierte interne Aktivitäten bzw. Aktionen ausführen sollen ("EID" bzw. "event ID"), wodurch eine oder mehrere solcher interner Aktivitäten synchron veranlasst werden können. Mittels des Identifikationspakets kann somit zur Laufzeit bzw. flexibel innerhalb eines Kommunikationsvorgangs zwischen verschiedenen Kommunikationstypen gewählt werden. Außerdem können die Kommunikationsteilnehmer bzw. die Adressaten der Kommunikation bzw. des jeweiligen Kommunikationsvorgangs definiert werden.

Das Kommandopaket umfasst bevorzugt eine Information bezüglich der Art des Zugriff der ersten Kommunikationseinheit auf die zweite Kommunikationseinheit oder umgekehrt und dabei insbesondere ob ein Lesezugriff und/oder ein Schreibzugriff durchgeführt werden soll. Dabei definiert das Kommandopaket besonders bevorzugt, ob ein direkter oder indirekter Speicherzugriff über einen Adresszeiger erfolgt. Zusätzlich definiert das Kommandopaket ganz besonders bevorzugt ob auf eine oder mehrere Speicheradressen zugriffen werden soll und/oder ob ein wahlfreier Zugriff ("random access" bei einer Speicheradresse oder "random burst" bei mehreren Speicheradressen) oder ein linearer bzw. inkrementeller Speicherzugriff ("incremental burst" für mehrere Speicheradressen) oder ein bit-weiser Zugriff ("read-modifywrite") oder ein impliziter Zugriff ("inherent"), bei welchem die eine oder die mehreren Speicheradressen Teil des Kommandos bzw. Befehls sind, durchgeführt werden soll. Durch diese Art des Kommandopakets, welches zumindest einen der obig beschriebenen Zugriffe definiert, kann ein flexibler Zugriff zur Laufzeit bzw. innerhalb eines Kommunikationsvorgangs durchgeführt werden, wobei dieser Zugriff in Form des Kommandopakets je nach Betriebszustand durch die erste Kommunikationseinheit bzw. die Mastereinheit angepasst werden kann.

Das wenigstens eine Adresspaket, welches bevorzugt nach zumindest einem Kommandopaket übertragen wird, definiert bzw. umfasst die Information der einen oder der mehreren Speicheradressen, auf welche ein Lese- und/oder Schreibzugriff erfolgen soll.

Die Botschaft ("message") umfasst bevorzugt ein Datum oder mehrere Daten bzw. Datenpakete, wobei diesem Datum/ diesen Daten bzw. Datenpakten insbesondere jeweils mehrere entsprechende Datensignale zugeordnet sind, welche über die erste Datenleitung übertragen werden.

Es ist zweckmäßig, dass das Datenübertragungsprotokoll so ausgebildet ist, dass zunächst optional ein Synchronisationspaket übertragen wird, danach ein oder mehrere Identifikationspakete, insbesondere ein einziges Identifikationspaket, anschließend ein oder mehrere Kommandopakete, insbesondere ein einziges Kommandopaket, danach ein oder mehrere Adresspakete, anschließend eine Botschaft, umfassend ein oder mehrere Datenpakete, oder mehrere Botschaften, insbesondere eine Botschaft von der ersten Kommunikationseinheit an die Zweite und/oder eine Botschaft von der zweiten Kommunikationseinheit an die Erste, und optional zum Schluss ein Endungspaket über die erste Datenleitung übertragen werden.

Innerhalb eines Kommunikationsvorgangs werden bevorzugt einzelne oder sämtliche Pakete oder Teile eines Pakets, beispielsweise das Identifikationspaket und/oder ein oder mehrere Datenpakete, redundant übertragen bzw. gesendet, wodurch die Zuverlässigkeit des Kommunikationsvorgangs gesteigert werden kann. Die Kommunikationseinheiten und/oder das Datenübertragungsprotokoll sind insbesondere für solche redundanten Daten- bzw. Paketübertragungen ausgelegt.

Zweckmäßigerweise erfolgt innerhalb eines Kommunikationsvorgangs eine redundante invertierte Daten-Übertragung, beispielsweise einer Botschaft, indem durch Zugriff, insbesondere mittels des Kommandopakets, auf redundante DatenQuellen (gleicher Inhalt von mindestens zwei unterschiedlichen Datenquellen), bei welchen mindestens eine den redundanten Inhalt in einer abweichenden Form bzw. Codierung (z.B. invertiert) vorhält, eine mehrfache Übertragung eines Dateninhalts in unterschiedlicher Form stattfindet.

Bevorzugt erfolgt innerhalb eines Kommunikationsvorgangs eine redundante Übertragung des Identifikationspakets, indem eine Absicherung der Aktivitäten der zu synchronisierenden Kommunikationseinheiten durch redundantes Übertragen der "Event ID" durch die erste Kommunikationseinheit stattfindet.

Alternativ vorzugsweise erfolgt innerhalb eines Kommunikationsvorgangs eine redundante invertierte Übertragung des Identifikationspakets, indem eine Absicherung der Aktivitäten der zu synchronisierenden Kommunikationseinheiten durch redundantes Übertragen der "Event ID" durch die erste Kommunikationseinheit derart stattfindet, dass die redundant zu übertragenden "Event ID's" in unterschiedlicher Form (z.B. invertiert) übertragen werden.

Bevorzugt erfolgt innerhalb eines Kommunikationsvorgangs die Übertragung einer Statusinformation, indem die Kommunikationseinheit, auf welche ein Zugriff erfolgt, beispielsweise die zweite Kommunikationseinheit, durch Übertragung von Status Informationen, der Einheit von der der Zugriff erfolgt, beispielsweise die erste Kommunikationseinheit, Informationen über den Zustand der die Daten übertragenden Einheit und/oder die Gültigkeit der Daten selbst mitteilt. Insbesondere erfolgt die Übertragung einer konfigurierbaren Status-Information, indem die Kommunikationseinheit, auf die ein Zugriff erfolgt, durch Übertragung von Status-Informationen innerhalb des Kommunikationsvorgangs, der Kommunikationseinheit von der der Zugriff erfolgt, Informationen über den Zustand der die Daten übertragenden Einheit oder die Gültigkeit der Daten selbst mitteilt und die Art und/oder Anzahl der zu übertragenden Status Informationen konfigurierbar sind. Besonders bevorzugt erfolgt die Übertragung von zur Laufzeit konfigurierbare Status-Information, indem die Kommunikationseinheit, auf die ein Zugriff erfolgt, durch Übertragung von Status-Informationen innerhalb des Kommunikationszyklus, der Kommunikationseinheit von der der Zugriff erfolgt, Informationen über den Zustand der die Daten übertragenden Einheit oder die Gültigkeit der Daten selbst mitteilt und die Art und/oder Anzahl der zu übertragenden Status Informationen von dem Inhalt einer Speicherzelle der Kommunikationseinheiten auf die der Zugriff erfolgt abhängt, welche durch mindestens eine andere Kommunikationseinheit zur Laufzeit änderbar ist.

Zweckmäßigerweise erfolgt innerhalb eines Kommunikationsvorgangs die Übertragung eines Echos indem die Einheit auf die der Zugriff erfolgt durch zumindest teilweise Wiederholung der durch die zugreifende Einheit übertragenen Informationen den korrekten Empfang quittiert insbesondere erfolgt eine Übertragung eines Echos des Identifikationspakets und/oder des Kommandopakets und/oder des Adresspakets und/oder des Endungspakets, indem die Kommunikationseinheit, auf welche der Zugriff erfolgt, beispielsweise die zweite Kommunikationseinheit durch das Übertragen einer zumindest teilweisen Wiederholung des entsprechenden Pakets an die erste Kommunikationseinheit den Empfang des entsprechenden Pakets quittiert bzw. bestätigt.

Das Endungspaket wird bevorzugt als Echo der einen Kommunikationseinheit, auf welche zugegriffen wurde, beispielsweise die zweite Kommunikationseinheit, wieder an die erste Kommunikationseinheit übertragen, wobei dieses Echo eine zumindest teilweise Wiederholung umfasst und/oder auf Basis der ursprünglich übertragenen Daten/Pakete gebildeten bzw. berechneten Prüfdaten. Alternativ vorzugsweise wird das Endungspaket von der zugreifenden Einheit, beispielsweise der ersten Kommunikationseinheit, an die andere/n Kommunikationseinheit/en als zumindest teilweise Wiederholung und/oder Prüfdatenpaket am Ende eines Kommunikationsvorgangs übertragen.

Es ist bevorzugt, dass innerhalb eines Kommunikationsvorgangs eine Zeitreferenz zur Bestimmung des Alters eines Datums übertragen wird, indem die Einheit auf die der Zugriff erfolgt, beispielsweise die zweite Kommunikationseinheit, eine Zeitinformation bzgl. des Alters von Daten bildet und diese mit den Daten an die zugreifende Einheit überträgt.

Bevorzugt wird innerhalb eines Kommunikationsvorgangs ein Zähler einer internen Zeitreferenz übertragen, indem die Einheit auf die der Zugriff erfolgt eine Zeitinformation bzgl. des Alters von Daten bildet und diese mit den Daten an die zugreifende Einheit überträgt, wobei die Zeitinformation durch Zählen von K2-internen Ereignissen (z.B. interner Timer) gebildet wird. Alternativ vorzugsweise wird ein Zähler einer externen Zeitreferenz (MSG-CNT) übertragen, indem die Einheit auf die der Zugriff erfolgt eine Zeitinformation des Alters von Daten bildet und diese mit den Daten an die zugreifende Einheit überträgt, wobei die Zeitinformation durch Zählen von bezüglich der Einheit, auf welche der Zugriff erfolgt, beispielsweise die zweite Kommunikationseinheit, externen Ereignissen (z.B. Anzahl der erkannten Kommunikationszyklen) gebildet wird.

Die erste Kommunikationseinheit bzw. Mastereinheit wird vorzugsweise von einem Steuergerät und/oder einer elektronischen Kontrolleinheit umfasst und wenigstens die zweite Kommunikationseinheit bzw. erste Slaveeinheit insbesondere von einem Sensor und/oder Aktuator und/oder einer anderen elektronischen Kontrolleinheit.

Das Datenübertragungsprotokoll definiert zweckmäßigerweise eine digitale Schnittstelle, welche Möglichkeiten zur Steigerung der Datenübertragungsrate zwischen Komponenten bzw. erster und zweite Kommunikationseinheit bzw. Master- und Slaveeinheit/en bietet, bei denen neben Nutzdaten auch Zusatzdaten zur Absicherung der Signalaufbereitung und des Datentransfers übermittelt werden können. Neben den Möglichkeiten die Sicherheit, Störfestigkeit und Robustheit der Datenübertragung zu steigern, bieten digitale Schnittstellen größere Flexibilität und Skalierbarkeit als zum Beispiel analoge Schnittstellen. Durch die sequenzielle Datenübertragung und die entsprechend geringe Anzahl der Verbindungsleiter bzw. Datenleitungen, insbesondere der einzigen Datenleitung, können Kosten für die Schnittstellenanbindung reduziert und potentielle Fehlerquellen durch Kontaktprobleme minimiert werden.

Die hier beschriebene Erfindung ermöglicht insbesondere die Anbindung von Sensoren, Aktuatoren und Steuergeräten bei minimaler Anzahl an Verbindungs- und Kommunikationsleitungen. Hierbei bestehen alle Vorzüge einer bidirektionalen digitalen Datenübertragung in Richtung Übertragungssicherheit, Störfestigkeit, Robustheit und Flexibilität bei reduzierten Kosten durch die geringe Hardwarekomponentenanzahl und Standard-Hardwarekomponenten (Standard-Serial-Peripheral-Interface-Modul), was außerdem den Softwareaufwand/ Codeoverhead und die Rechenlaufzeit reduziert.

Die Erfindung betrifft entsprechend außerdem bevorzugt eine Kommunikationseinheit und/oder ein Datenübertragungsverfahren für eine bidirektionale, serielle Datenkommunikation zwischen der ersten Kommunikationseinheit/ Mastereinheit, insbesondere als Mikrocontroller ausgebildet, und der zweiten Kommunikationseinheit/ ersten Slaveeinheit, insbesondere als Sensor oder Aktuator ausgebildet, mit einer Standard-Serial-Peripheral-Interface-Schnittstelle. Durch Reduzierung auf nur eine Signalleitung bei Beibehaltung der kompletten Funktionalität erhält man eine kosten- und entwicklungseffiziente Schnittstellenimplementierung. Die Kompatibilität zum standardisierten synchronen Serial-Peripheral-Interface, die auf den meisten konventionellen Mikrocontrollern mit 3 Signalleitungen + Slave-Select-Leitung verfügbar ist, ist auch mit dieser einen Signalleitung bzw. der ersten/einzigen Datenleitung möglich und kann vorzugsweise ohne zusätzliche logische/elektronische Komponenten oder Bustreiber realisiert werden. Bei der digitalen Datenübertragung wird gegenüber der analogen oder quasidigitalen Übertragung das Signal nicht verfälscht, weshalb auch andere Nutzdaten verlustfrei übertragen werden können. Die durch die digitale bzw. verlustfreie Datenübertragung weggefallenen Toleranzen können beim Design und bei der Serienproduktion von Sensoren und Aktuatoren anderweitig verteilt werden, was sich kostenreduzierend auswirkt.

Das Kommunikationssystem weist bevorzugt an mindestens einem Aus-/Eingang wenigstens der zweiten Kommunikationseinheit und/oder an wenigstens einem Aus-/Eingang aller Slaveeinheiten und/oder der der ersten Kommunikationseinheit eine Überspannungs-Schutzdiode bzw. "Transient Voltage Suppressor Diodes (TVS)" auf, welche die ESD-Robustheit des Systems steigern.

Zweckmäßigerweise weist das Kommunikationssystem Kondensatoren an Signalleitungen bzw. zumindest an der ersten Datenleitung auf, welche die Anstiegs- und Fallzeiten der Signalflanken und somit die ausgesendete Störabstrahlung in wünschenswerter bzw. definierter Weise beeinflussen.

Um einen "idle high voltage level" der ersten Kommunikationseinheit zu gewährleisten, beispielsweise bei einer Initialisierung, weist diese bevorzugt einen "pull up"-Widerstand auf, welcher den Signalwert auf der ersten Datenleitung auf einen definierten "High"-Pegel einstellt, im Fall dass kein Kommunikationsteilnehmer Daten über die erste Datenleitung überträgt.

Unter dem Begriff OSPI versteht man vorzugsweise ein Eindraht serielles Peripher-Interface (one wire serial peripheral interface).

Das Kommunikationssystem weist zweckmäßigerweise lediglich eine einzelne Mastereinheit als erste Kommunikationseinheit und keine separate Taktübertragungsleitung auf.

Die erste Kommunikationseinheit/ Mastereinheit ist bevorzugt mit einer elektronischen Kontrolleinheit ECU verbunden, insbesondere in diese integriert. Die ECU empfängt besonders bevorzugt die von der Mastereinheit empfangenen Daten und wertet diese aus.

Es ist zweckmäßig, dass gemäß Datenübertragungsprotokoll das Datenanforderungssignal der ersten Kommunikationseinheit periodisch mit undefinierter Taktzeit oder sporadisch an zumindest die zweite Kommunikationseinheit über die erste Datenleitung übertragen wird.

Es ist bevorzugt, dass gemäß Datenübertragungsprotokoll das Datenanforderungssignal der ersten Kommunikationseinheit als Taktquelle für den Datentransfertakt und insbesondere als Taktquelle für zumindest eine taktungenaue weitere Kommunikationseinheit verwendet wird.

Das Datenanforderungssignal wird bevorzugt von der ersten Kommunikationseinheit auf der ersten Datenleitung/ gemeinsamen Verbindungsleitung ausgegeben bzw. an diese angelegt. Die zweite Kommunikationseinheit erkennt das Datenanforderungssignal und steuert ihrerseits ein entsprechendes Bit des Datensignals auf der gemeinsamen ersten Datenleitung an. Sobald die zweite Kommunikationseinheit das Anforderungssignal der ersten Kommunikationseinheit erkannt hat, darf das Senden des Datensignals der zweiten Kommunikationseinheit, insbesondere unabhängig vom aktuellen Datenanforderungssignal beginnen. Bei einer "dominanten" Auslegung der zweiten Kommunikationseinheit entspricht das Summensignal auf der ersten Datenleitung zum Zeitpunkt der Datenübernahme durch die erste Kommunikationseinheit dem Datensignal der ersten Kommunikationseinheit, ohne dass das Datenanforderungssignal zwingend abgeschaltet werden muss. Hierbei können sowohl das Datenanforderungssignal als auch das Datensignal gleichzeitig aktiv sein.

Für die Übertragung ihrer Daten und Synchronisätionssignale nutzen sowohl die erste Kommunikationseinheit als auch die zweite Kommunikationseinheit bevorzugt die gleiche physikalische Größe, beispielsweise Spannung oder Strom. Alternativ vorzugsweise werden unterschiedliche physikalische Größen verwendet.

Bevorzugt nutzen die erste und zweite Kommunikationseinheit die gleichen Werte bzw. Wertebereiche bzw. Pegel zur Signalübertragung. Alternativ vorzugsweise nutzen sie unterschiedliche Werte/ Wertebereiche/ Pegel.

Soll ein Slave zum Master und umgekehrt umkonfiguriert werden, so muss zweckmäßigerweise durch Umkonfigurierung der Ausgangsbeschaltung sichergestellt werden, dass ein Slave die Signale des Masters auf der Eindraht-Verbindungsleitung überschreiben kann. Danach kann der neue Master z.B. mit einem Standard-"serial-peripheral-interface"-Modul und der neue Slave mit einer OSPI-Konfiguration betrieben werden.

Weiterhin kann ein Slave bevorzugt auch über einen OSPI-Konverter betrieben werden, der den Takt aus dem Datensignal extrahiert und auf getrennten Leitungen zur Verfügung stellt. Somit können Slave-Kommunikationseinheiten mit Standard-"serial-peripheral-interface"-Modulen eingesetzt werden. Der Vorteil liegt darin, dass die Übertragung streckenweise auf zumindest eine Verbindungsleitung reduziert werden kann, die sowohl Daten als auch das Taktsignal enthält.

An einer Mastereinheit (Master) können bevorzugt ein oder mehrere Slaveeinheiten bzw. Slave-Kommunikationseinheiten bzw. Slaves angeschlossen werden, wobei einzelne Slave-Kommunikationseinheiten wiederum selbst Mastereinheiten für weitere untergeordnete Slave-Kommunikationseinheiten sein können. Hierzu sollten die ersten Slave-Kommunikationseinheiten, die als Master für untergeordnete Slaves verwendet werden, zweckmäßiger Weise über separate "serial-peripheral-interface"-/OSPI-Module oder über die Möglichkeit zur Abkopplung vom Primärbus und/oder zur Umkonfigurierung auf eine Master- bzw. Slave-Konfiguration verfügen.

Das elektronische Kommunikationssystem basiert bevorzugt auf einer seriellen, synchronen Datenübertragung und umfasst mindestens eine, die Kommunikation initiierenden erste Kommunikationseinheit bzw. Mastereinheit und mindestens eine darauf reagierenden zweite Kommunikationseinheit bzw. Slaveeinheit K2, wobei während der Kommunikation die Zeitbasis für die Übertragung der Datenelemente in beide Richtungen durch die, die Kommunikation initiierende Einheit, vorgegeben wird.

Das elektronische Kommunikationssystem ist vorzugsweise für den Einsatz im Automobil-Bereich ausgebildet.

Das elektronische Kommunikationssystem ist zweckmäßigerweise für sicherheitsrelevante Applikationen ausgebildet bzw. ausgelegt.

Das elektronische Kommunikationssystem umfasst bevorzugt einen synchronen oder alternativ vorzugsweise einen asynchronen Bus.

Die Erfindung bezieht sich außerdem auf die Verwendung des elektronischen Kommunikationssystems in Kraftfahrzeugen. Insbesondere ist das Kommunikationssystem zur Anbindung von Sensoren, besonders bevorzugt Drucksensoren, und/oder Aktoren in einem Kraftfahrzeug vorgesehen. Alternativ vorzugsweise betrifft die Erfindung die Verwendung des elektronischen Kommunikationssystem und des Verfahrens in der Automatisierungstechnik.

Die stetig wachsende Anzahl von Sensoren, Aktuatoren, elektrischen Steuer- und Regelkomponenten innerhalb konventioneller Kraftfahrzeuge und die gleichzeitige Forderung nach erweiterten Funktionalitäten bei gleichen oder niedrigeren Kosten, erfordern flexible und anspruchsvolle Möglichkeiten zur Kommunikation von Steuergeräten und Sensoren/Aktuatoren. Da viele dieser Komponenten im Automotive-Bereich auch maßgeblichen Einfluss auf die Fahrdynamik besitzen, müssen entsprechende Anforderungen an die Sicherheit und die Robustheit der Signale, Daten und Systeme eingehalten werden, welche das erfindungsgemäße Kommunikationssystem und Datenübertragungsverfahren insbesondere erfüllen.

Weitere bevorzugte Ausführungsformen ergeben sich aus den Unteransprüchen und den nachfolgenden Beschreibungen von Ausführungsbeispielen an Hand von Figuren.

Es zeigen in schematischer Darstellung
- Fig. 1, 2: beispielhafte Kommunikationssysteme,
- Fig. 3, 4: eine beispielhafte Datenübertragung gemäß dem ersten Datenübertragungsmodus,
- Fig. 5: eine beispielhafte Signalform bezüglich des zweite Datenübertragungsmodus,
- Fig. 6: ein beispielhaftes Synchronisationspaket,
- Fig. 7: ein beispielhaftes Kommunikationssystem mit elektronischen Zusatzbauelementen zur Verbesserung der EMV (elektromagnetische Verträglichkeit)
- Fig. 8: ein beispielhaftes Datenübertragungsprotokoll mit einem bestimmten Datenformat bzw. Codeformat,
- Fig. 9: ein Ausführungsbeispiel des Datenübertragungsprotokolls hinsichtlich eines Datenzugriffs durch die initiierende Einheit bzw. erste Kommunikationseinheit (Master),
- Fig. 10: die Grundlagen des Datenübertragungsprotokolls,
- Fig. 11 bis 13: drei alternative, beispielhafte Ausprägungen des ersten Datenübertragungsmodus,
- Fig. 14: unterschiedliche Ausbildungsbeispiele des Kommunikationssystems, und
- Fig. 15: das Blockschaltbild eines beispielhaften Konverters.

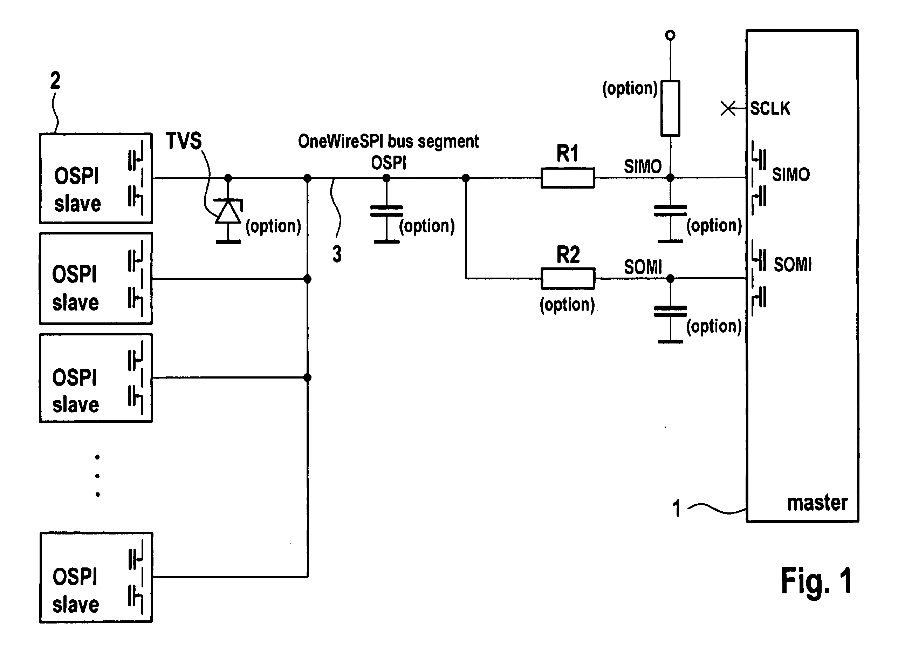

Fig. 1 zeigt ein beispielhaftes Kommunikationssystem mit einer ersten Kommunikationseinheit 1 bzw. Mastereinheit 1, welche über erste Datenleitung 3 mit einer zweiten Kommunikationseinheit 2 bzw. einer ersten Slaveeinheit 2 sowie weiteren Slaveeinheiten "OSPI slave" (one wire serial peripheral interface) verbunden ist. Erste Kommunikationseinheit 1 weist eine integrierte Taktgebereinheit auf, welche das Taktsignal SCLK bereitstellt. Darüber hinaus weist Mastereinheit 1 einen Ausgangskanal SIMO (slave in master out) und einen Eingangskanal SOMI (slave out master in) auf, welche beispielgemäß jeweils mittels eines Widerstands R1, R2 mit erster Datenleitung 3 verbunden sind. Ausgangskanal SIMO und Eingangskanal SOMI werden dabei von der integrierten Taktgebereinheit angesteuert bzw. mit dieser betrieben. Mastereinheit 1 überträgt in einem zweiten Datenübertragungsmodus bzw. einem Master-Sende-Datenübertragungsmodus über den Ausgangskanal SIMO ein Taktsignal SCLK, welches intern von der Taktgebereinheit bereitgestellt wird, gleichzeitig mit Ausgangsdaten. Die Ausgänge der Slaveeinheiten, wie beispielsweise der zweiten Kommunikationseinheit 2 befinden sich jeweils in einem hochohmigen Zustand. Die Slaveeinheiten lesen die SIMO-Daten über erste Datenleitung 3.

Die Slaveeinheiten übertragen ihrerseits in einem ersten Datenübertragungsmodus bzw. Slave-Sende-Datenübertragungsmodus ihre Daten unabhängig vom gerade an erster Datenleitung 3 anliegenden Signallevel des SIMO-Ausgangs, wobei das slaveseitige Senden des jeweiligen Datensignals synchronisiert wird, indem das Datensignal stets als Antwort auf ein Taktsignal der ersten Kommunikationseinheit 1 über erste Datenleitung 3 übertragen wird. Dieses Taktsignal wird an den Ausgang SIMO der Mastereinheit 1 angelegt und ebenfalls über erste Datenleitung 3 übertragen. Das jeweilige Datensignal der zweiten Kommunikationseinheit 2 bzw. der ersten Slaveeinheit 2 empfängt Mastereinheit 1 über den SOMI-Eingang.

Erste Datenleitung 3 wird auch als "One Wire Serial Peripheral Interface" Bus Segment bezeichnet Beispielgemäß weist jede Slaveeinheit eine Überspannungs-Schutzdiode (Transient Voltage Suppressor Diodes) TVS auf, um eine verbesserte elektromagnetische Verträglichkeit der Kommunikation mit den Slaveeinheiten zu erzielen.

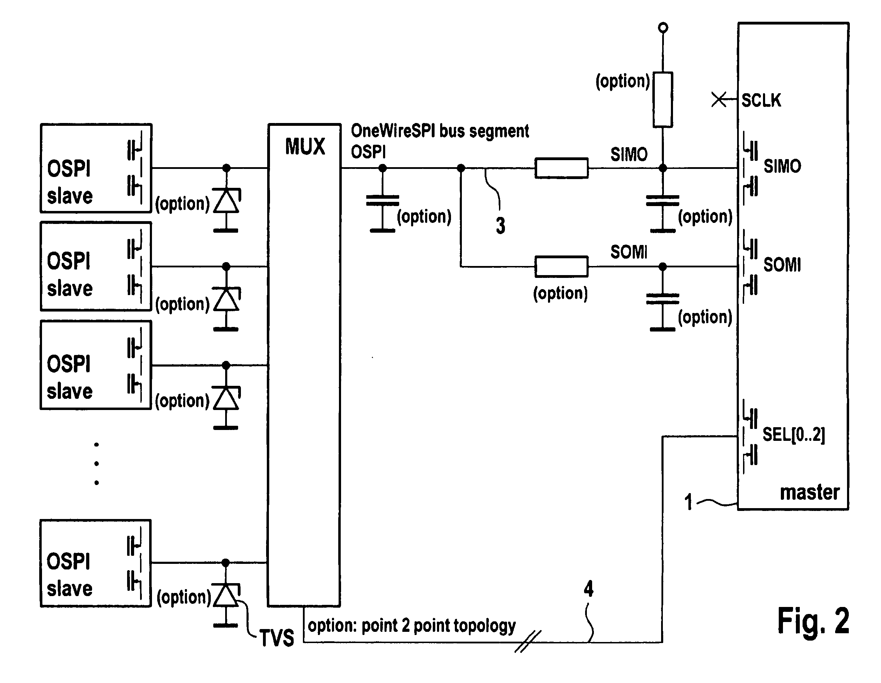

Das in Fig. 2 dargestellte Ausführungsbeispiel des Kommunikationssystems weist im Unterschied zu Fig.1 eine zusätzliche Multiplexereinheit MUX auf, an welche alle Slaveeinheiten "OSPI slave" angeschlossen sind. Zusätzlich ist Mastereinheit 1 mittels einer Steuerleitung 4 mit dem Selekteingang der Multiplexereinheit MUX verbunden und steuert somit die Kommunikation über der Slaveeinheiten über erste Datenleitung 3 bezüglich der Teilnehmerauswahl. Beispielgemäß weist jede Slaveeinheit eine Überspannungs-Schutzdiode (Transient Voltage Suppressor Diodes) TVS auf, um eine verbesserte elektromagnetische Verträglichkeit der Kommunikation mit den Slaveeinheiten zu erzielen. Die Multiplexereinheit unterdrückt beispielgemäß unerwünschte Ausgangssignale einer nicht ausgewählten Slaveeinheit.

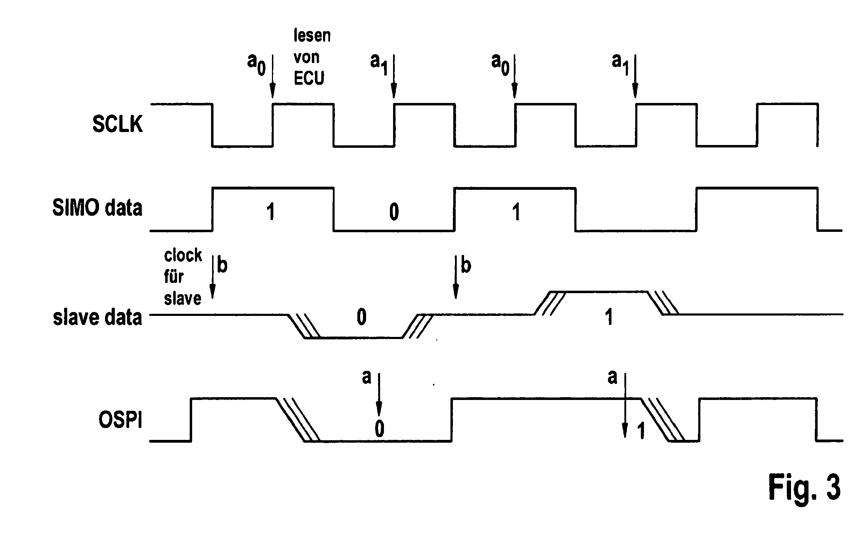

Fig. 3 zeigt einen beispielhaften ersten Datenübertragungsmodus bzw. einen Slave-Sende-Datenübertragungsmodus des Datenübertragungsprotokolls zwischen einer ersten Kommunikationseinheit bzw. Mastereinheit und einer zweiten Kommunikationseinheit bzw. ersten Slaveeinheit. Taktsignal SCLK der Mastereinheit gibt mit doppelter Frequenz den Takt für ein alternierendes Digitalsignal SIMO data vor, welches über die Datenleitung an den Slave als Taktsignal bzw. Datenanforderungssignal zur Synchronisation übertragen wird, da dieser beispielgemäß keine eigene Taktgebereinheit aufweist oder er zwar eine Taktgebereinheit aufweist, diese aber zumindest nicht synchron zu Taktgebereinheit der Mastereinheit arbeitet. Die steigende Flanke b des jeweiligen "high" levels gibt der Slaveeinheit den Sendebefehl, wobei die Slaveeinheit innerhalb eines definierten Zeitfensters antworten muss, nämlich nach dem jeweiligen Zeitpunkt a₀, welcher durch eine steigende Flanke des Taktsignals definiert wird und vor dem jeweiligen Zeitpunkt b, welcher das jeweils nachfolgende Senden der Slaveeinheit veranlasst. Die Mastereinheit liest jeweils zu den Zeitpunkten a₀ und a₁, wobei beispielhaft nur die zum Zeitpunkt a₁ gelesenen Daten verwendet werden. Die durch die Slaveeinheit gesendeten Daten sind durch die "slave data"-Zeile veranschaulicht und die insgesamt auf der Datenleitung OSPI anliegenden Daten bzw. der jeweilige Gesamtsignallevel durch OSPI. Dabei werden das vom Taktsignal SCLK abhängige Taktsignal SIMO data und das Datensignal der Slaveeinheit "slave date" überlagert und im Wesentlichen gleichzeitig über die Datenleitung übertragen. In dem Ausführungsbeispiel liest die Mastereinheit also eine "0" und eine "1". Der Senderythmus und das "timing" der Slaveeinheit wird durch die SIMO data der Mastereinheit und die Ausbildung der Slaveeinheit bestimmt. Die Haltezeit der slave data muss jeweils zumindest bis zum nächsten Einlesezeitpunkt a₁ des Masters reichen. Das von der Mastereinheit an die erste Slaveeinheit übertragene Taktsignal "SIMO data" gewährleistet eine synchronisierte Datenübertragung im ersten Datenübertragungsmodus.

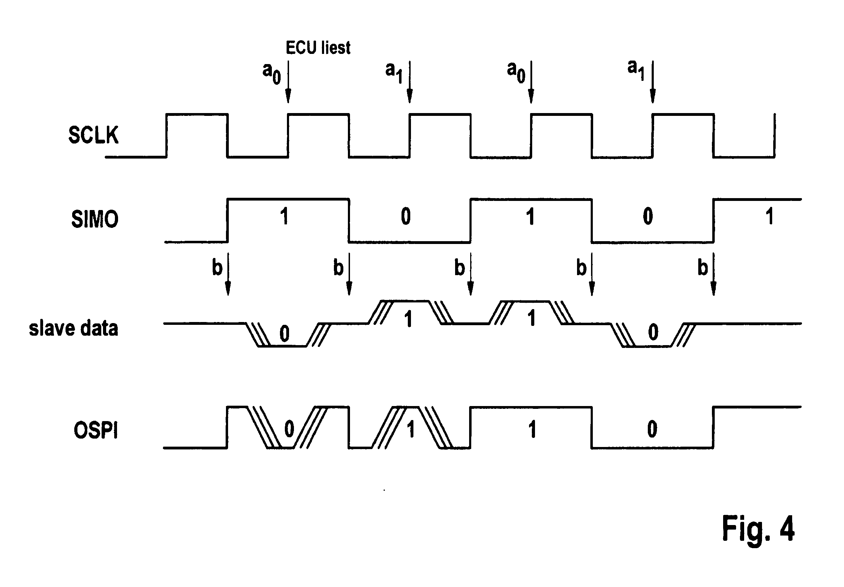

Fig. 4 zeigt einen beispielhaften Doppelratemodus des ersten Datenübertragungsmodus bzw. Slave-Sende-Datenübertragungsmodus, bei welchem die Slaveeinheit jeweils bei steigender und fallender Flanke des alternierenden Highlevels des SIMO-Signals sendet, bzw. nach dieser entsprechenden Flanke sendet. Die Mastereinheit liest jeweils zu den Zeitpunkten a₀ und a₁ wobei die zu beiden Zeitpunkten erfassten Daten weiterverwertet werden, beispielgemäß durch eine mit der Mastereinheit verbundene ECU. Das in Fig. 4 veranschaulichte Protokoll basiert ansonsten auf dem in Fig. 3 beschriebenen. Auch in diesem Fall weist die Slaveeinheit keine eigene Taktgebereinheit auf oder eine Taktgebereinheit, welche nicht synchron zur Taktgebereinheit der Mastereinheit arbeitet.

Alternativ beispielhaft werden auch asymmetrische Takt- Codierschemata bzw. Datenübertragungsmodi vorgeschlagen, beispielsweise mit einer 2zu1 oder 3zu1 Rate anstatt der in Fig. 3 und 4 veranschaulichten 1zu1 Rate.

In einem nicht dargestellten Beispiel wird das Taktsignal der ersten Kommunikationseinheit bzw. Mastereinheit durch ein nicht periodisches Datenanforderungssignal ersetzt, wobei die Datenübertragung im ersten Datenübertragungsmodus flexibel durch die Mastereinheit bestimmt werden kann, sowohl bezüglich der Datenrate, als auch bezüglich des jeweiligen Zeitpunkts der Datenanforderung.

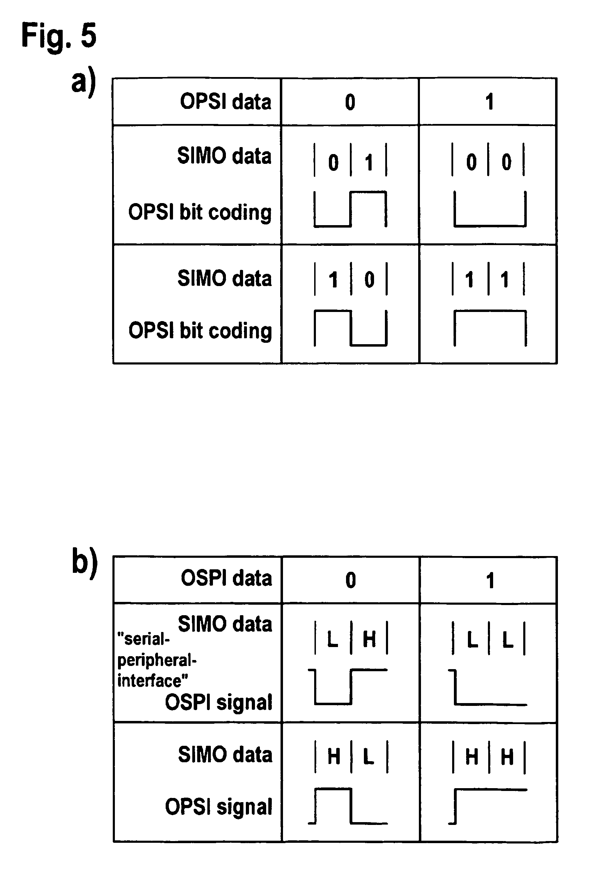

In Fig. 5 a) und b) werden beispielhafte Codierschemata eines zweiten Datenübertragungsmodus bzw. Master-Sende-Datenübertragungsmodus veranschaulicht, welches keine aufeinanderfolgenden "low"- oder "high"-bits umfasst, damit die Daten des Master-Sende-Datenübertragungsmodus von dem Synchronisationspaket unterschieden werden können. Beispielhaft bedeutet ein schneller Flankenwechsel eine "0" und ein langsamer Flankenwechsel eine "1". Mittels der dem Synchronisationspaket folgenden Daten, welche entsprechend eines dieser Codierschemata codiert sind, wird beispielgemäß die Information über die Auswahl eine Kommunikationspartners bzw. ein Identifikationspaket sowie optional weitere Informationspakete, beispielsweise ein Kommandopaket, ein Adresspaket und Datenpakete an eine oder mehrere Slaveeinheiten übermittelt.

Das Datenübertragungsprotokoll umfasst beispielsweise das Übertragen eines Synchronisationspakets von der ersten Kommunikationseinheit an zumindest die zweite Kommunikationseinheit zu Beginn eines Kommunikationsvorgangs, wodurch der zweiten Kommunikationseinheit bzw. der ersten Slaveeinheit oder sämtlichen Slaveeinheiten synchron an dem Kommunikationsvorgang passiv und/oder aktiv teilnehmen können. Dieses Synchronisationspaket weist ein eindeutig identifizierbares bzw. eigenständiges und unverwechselbares Muster auf, um sich von den anderen Signalen bzw. Signalmustern zu unterscheiden und so den Start eines neuen Kommunikationsvorgangs eindeutig anzuzeigen.

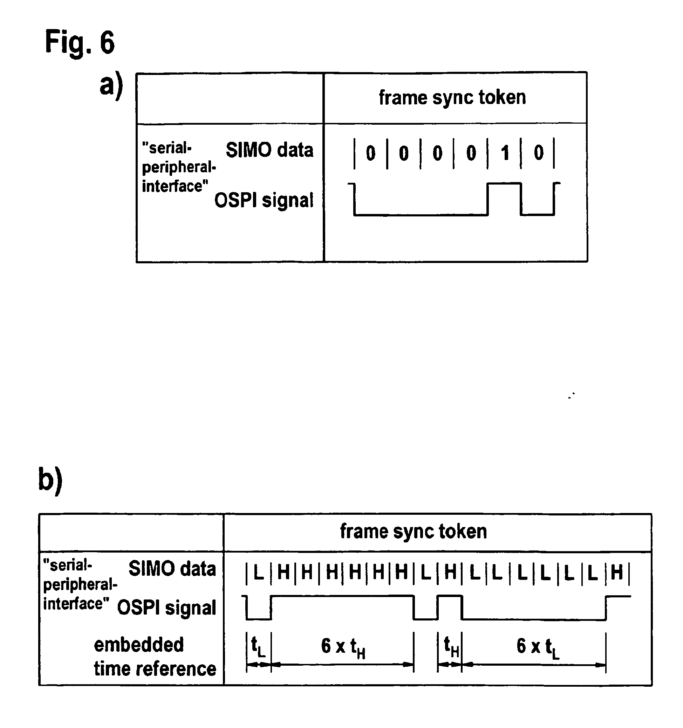

Solch ein Synchronisationspaket frame sync token ist anhand Fig. 6 veranschaulicht und besteht aus einer Folge von 4mal "low level" als Start-Impulspause einmal "high level" als Start-Impuls und einem abschließendes "low level". Aus dem beispielgemäßen Impulspausen- zu Impuls- Verhältnis von 4 zu 1 kann die zweite Kommunikationseinheit bzw. die jeweilige Slaveeinheit eine Taktreferenzgröße gewinnen, mit welcher eine Anpassung des eigenen Antwortzeitintervalls bzw. Datenanforderungssignal/Taktsignal-Antwortsignal-Zeitintervalls durchgeführt wird. Es ist beispielhaft aufgrund einer relativ ungenauen Taktgebereinheit der Slaveeinheit vorgesehen, dass die Slaveeinheit bei einer geringeren Anzahl von in Folge übertragenen "low"-bits, beispielsweise bei drei, schon das Synchronisationspaket als solches erkennt.

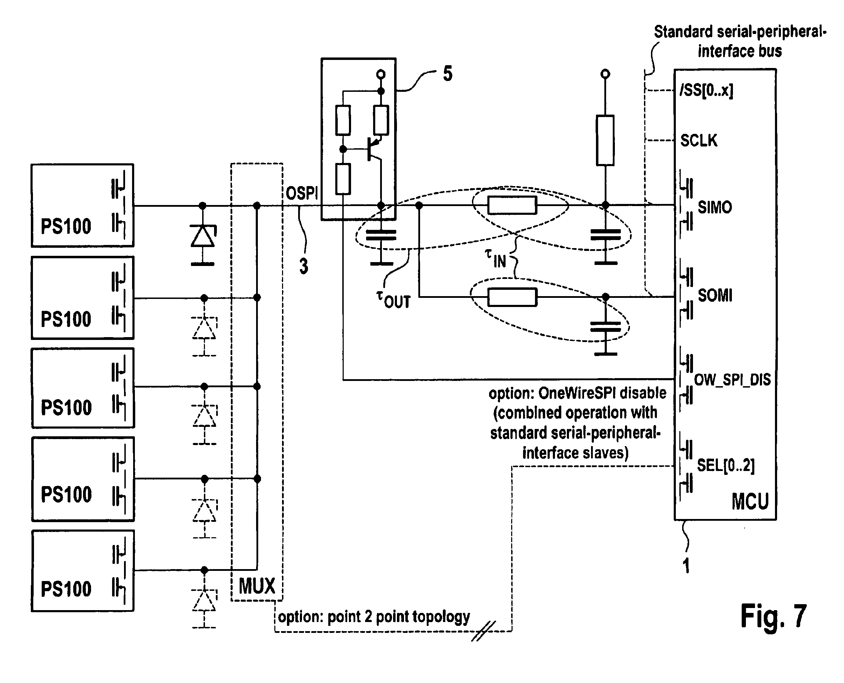

In Fig. 7 wird ein Ausführungsbeispiel des Kommunikationssystems gezeigt, das eine Umschalteinheit 5 aufweist, mit welcher das Kommunikationssystem und insbesondere die erste Kommunikationseinheit 1 bzw. Mastereinheit 1 zwischen einem Betrieb mit erster Datenleitung 3 als einzige Datenleitung bzw. Datenübertragungsleitung und einem Serial-Peripheral-Interface-Normal-Betrieb mit mehreren Datenleitungen, beispielgemäß vier, und einer Taktleitung entsprechend dem Standart Serial-Perioheral-Interface Bus, umgeschaltet werden kann. Diese Umschaltung erfolgt über den Ausgang OneWireSPI disable bzw. OW_SPI_DIS der ersten Kommunikationseinheit 1, welcher mit Umschalteinheit 5 verbunden ist. Beispielgemäß ist Mastereinheit 1 für beide Betriebsarten einsetzbar angeschlossen. Die erste Kommunikationseinheit 1 bzw. Mastereinheit 1 weist in diesem Ausführungsbeispiel zwei Datenanschlüsse SIMO, SOMI auf, von denen ein Datenanschluss SIMO, SOMI als Dateneingang und ein Datenanschluss SIMO, SOMI als Datenausgang betrieben wird, wobei die Datenanschlüsse SIMO, SOMI synchron zueinander betrieben werden. Außerdem ist noch ein optionale Multiplexer MUX dargestellt, mit dem die Auswahl einer Slaveeinheit mittels des Selektausgangs SEL des Mastereinheit durchgeführt werden kann. Die zusätzlichen elektronischen Bauelemente τIn und τOut dienen der elektrisch symmetrischen Anbindung der ersten Datenleitung 3 sowie einer Steigerung der EMV.

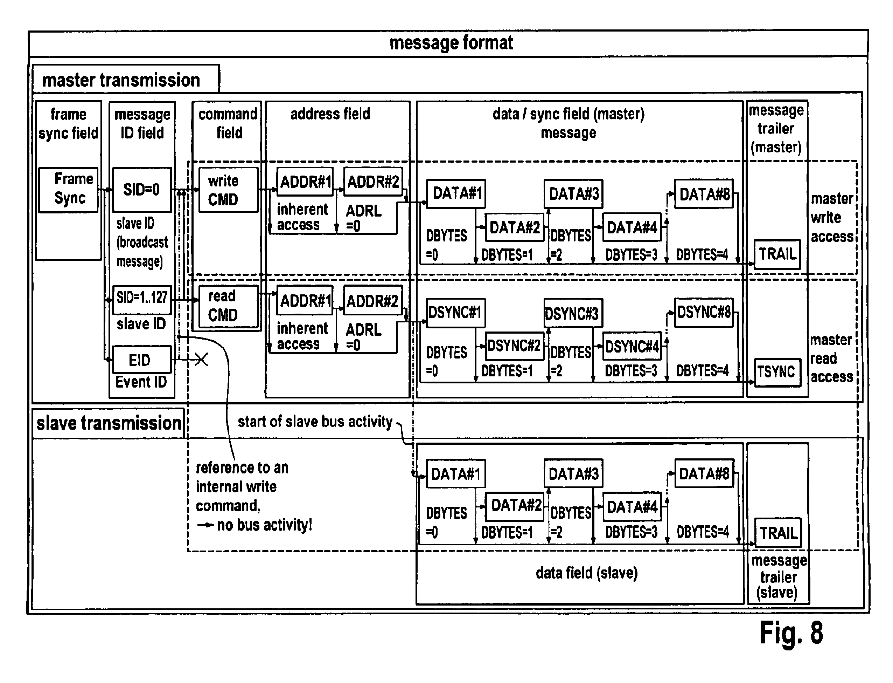

Fig. 8 zeigt die beispielhafte Ausbildung von Datenübertragungsvorgängen entsprechend des Datenübertragungsprotokolls, wobei eine Botschaft "message" von der ersten Kommunikationseinheit zur zweiten Kommunikationseinheit mittels des zweiten Datenübertragungsmodus "master transmission" und von der zweiten Kommunikationseinheit zur ersten Kommunikationseinheit mittels des ersten Datenübertragungsmodus "slave transmission" übertragen wird. Dabei umfasst die Botschaft jeweils mehrere Datenpakete DATA#n, welche hinsichtlich ihres Absenders, also Master oder Slave, unterscheidbar sind.

Zunächst sendet die erste Kommunikationseinheit bzw. die Mastereinheit ein Synchronisationspaket Frame Sync, welches zur Synchronisation der Kommunikation mit der zweiten Kommunikationseinheit bzw. der wenigstens ersten Slaveeinheit bzw. den weiteren Busteilnehmern dient und einen Kommunikationsvorgang einleitet. Danach folgt ein Identifikationspaket ID, welches entweder zur Identifizierung des Ziels SID (slave ID) oder zur Identifikation einer auszuführenden Routine bzw. eines Events dient EID (event ID). Ein EID-Identifikationspaket erzeugt beispielsweise keine weitere Kommunikation in direkter Weise, weil diesem Event zugeordnete Kommandos und Adressen in jedem Slave bereits hinterlegt sind. Für den Fall SID=0 weitere Informations bzw. Anweisungspakete an alle weiteren Busteilnehmer (broadcast message). Diese sind beispielsweise ein Kommandopaket, umfassend einen Schreibbefehl write CMD bei einem reinen Sendevorgang der Mastereinheit, Adresspakete ADDR#1, ADDR#2 sowie eine Botschaft in Form von Datenpaketen DATA#1 bis DATA#8. Abschließend umfasst die der Kommunikationsvorgang das Übertragen eines Endungspakets TRAIL, welches Prüfdaten aufweist.

Zusätzlich ist ein Kommunikationsvorgang veranschaulicht, bei dem eine Slave ID (identification) SID einer bestimmten Slaveeinheit als Identifikationspaket von der Mastereinheit gesendet wird. Danach sendet die Mastereinheit einen Lesebefehl read CMD als Kommandopaket und zwei Adresspakete ADDR#1, ADDR#2. Anschließend antwortet die Slaveeinheit mit den an diesen Adressen abgelegten Daten und sendet diese Daten an die Mastereinheit. Dabei sendet die Mastereinheit Anforderungssignale DSYNC#1 bis DSYNC#8 zur Synchronisation der Datenübertragung der Slaveeinheit, auf welche die Slaveeinheit jeweils mit einem der Datenpakete DATA#1 bis DATA#8 antwortet. Diese Datenübertragung wird mit einem Endungspaket TRAIL abgeschlossen, welches ebenfalls als Antwort auf ein Anforderungspaket der Mastereinheit TSYNC von der Slaveeinheit gesendet wird.

Mastereinheit und Slaveeinheit kommunizieren beispielgemäß ausschließlich über die erste Datenleitung als einzige Datenleitung.

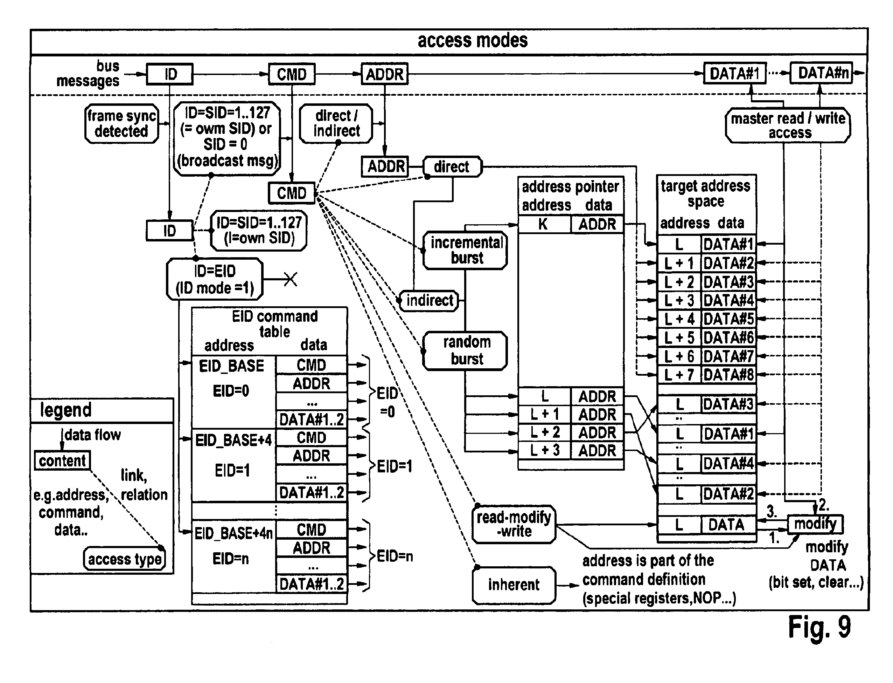

In Fig. 9 ist beispielhaft die Informations- und Signalverarbeitung einer zweiten Kommunikationseinheit bzw. einer Slaveeinheit im Zusammenwirken bzw. als Reaktion auf eine Botschaft der ersten Kommunikationseinheit bzw. der Mastereinheit veranschaulicht. Die Slaveeinheit erfasst dabei zu Beginn des Kommunikationsvorgangs ein nicht dargestelltes Synchronisationspaket bzw. Synchronisationssignal frame sync der Mastereinheit. Anschließend wird ein von der Mastereinheit gesendetes Identifikationspaket ID ausgewertet. Beinhaltet dies eine Event ID EID, dann wird dieses Event anhand eines im Slave hinterlegten EID command tables interpretiert und die entsprechende Routine, wird mittels der hinterlegten Kommando- und Adresspakete sowie der gespeicherten Daten ausgeführt. Dabei findet diese Ausführung beispielgemäß innerhalb jeder an denselben Bus angeschlossenen Slaveeinheit statt, wobei die Slaveeinheiten nicht antworten, sondern mögliche Ergebnisse lediglich an definierten eigenen Speicheradressen abspeichern.

Umfasst das Identifikationspaket eine Slave ID SID, welche aus einem oder mehreren Bits besteht, dann interpretiert die Slaveeinheit dies als noch unabgeschlossenen Kommunikationsvorgang mit der Mastereinheit und interpretiert das darauf folgende Kommandopaket CMD, welches die Information umfasst, ob ein Lese- oder Schreibzugriff erfolgen soll und ob dieser bezüglich einer direkten Adresse direct oder mittels eines Zeigers indirect erfolgt und ob dieser Speicherzugriff über den Zeiger "linear" bzw. inkrementell incremental burst oder "wahlfrei" random burst durchgeführt werden soll. Alternativ kann das Kommandopaket CMD einen Lese- oder Schreibezugriff aufweisen, bei welchem die Adresse impliziet enthalten ist "inherent" oder bei welchem ein bit-weiser Zugriff durchgeführt wird "read-modify-write".

Die Slaveeinheit umfasst beispielgemäß eine Speicherverwaltung mit Adresszeigern address pointer sowie einen Speicher, der Register und/oder RAM und/oder EEPROM und/oder eine andere Speicherart umfassen kann. Am Ende der Botschaft sendet die Mastereinheit oder die Slaveeinheit eine Botschaft bzw. Nutzdaten in Form von Datenpaketen DATA#1 bis DATA#n.

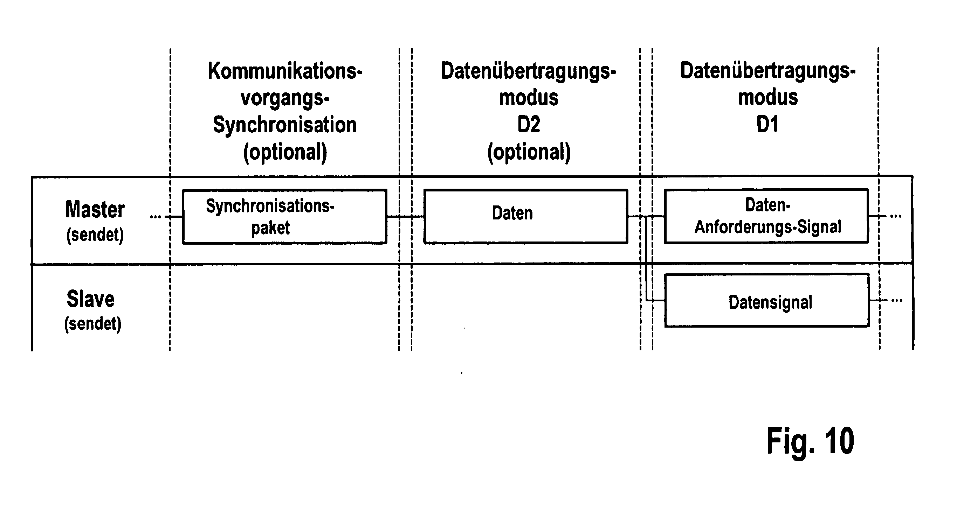

In Fig. 10 sind die Grundzüge des Datenübertragungsprotokolls beispielhaft veranschaulicht. In einem ersten Datenübertragungsmodus D1 antwortet eine Slaveeinheit mit jeweils einem Datensignal auf ein Datenanforderungssignal der Mastereinheit. In einem zweiten Datenübertragungsmodus D2 sendet lediglich die Mastereinheit Daten bzw. Datensignale, welche jeweils in ein Taktsignal eingebettet sind. Die Synchronisation zum Start eines neuen Kommunikationsvorgangs wird mittels der Übertragung eines Synchronisationspakets durch die Mastereinheit durchgeführt.

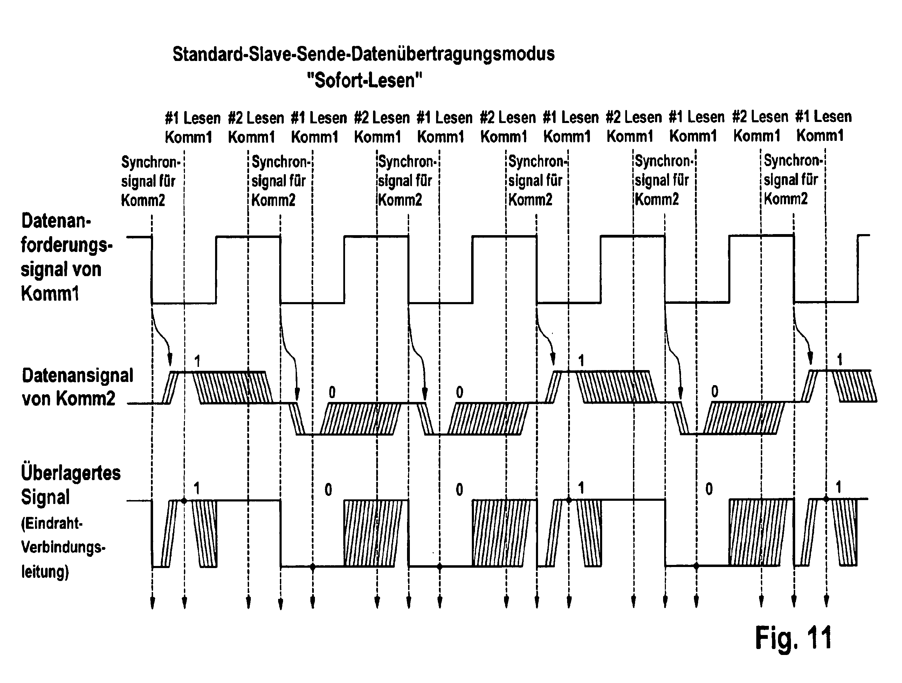

Anhand der Fig. 11 bis 13 sind verschiedene Ausprägungen des ersten Datenübertragungsmodus bzw. Slave-Sende-Datenübertragungsmodus zwischen zweiter Kommunikationseinheit Komm2 bzw. erster Slaveeinheit und erster Kommunikationseinheit Komm1 bzw. der Mastereinheit veranschaulicht.

Beim Standard-Slave-Sende-Datenübertragungsmodus in Fig. 11 wird jedes Datenelement der Slaveeinheit Komm2 entweder von steigenden oder von fallenden Flanken des Datenanforderungssignals bzw. Synchronisationssignals synchronisiert. Im Standard-"serial-peripheral-interface"-Modul der Mastereinheit bedeutet dies, dass bei jeweils zwei Lesezyklen nur eine Dateninformation übertragen wird. Mittels eines Filters, welcher im oder vor dem Master-"serial-peripheral-interface"-Modul bzw. der Mastereinheit vorgesehen ist, können die Daten des zusätzlichen Leseimpulses nach der Übertragung herausgefiltert werden. Hierdurch entfällt beim internen Programmablauf die Notwendigkeit zum Herausfiltern der Nutzdaten aus dem gelesenen Datenstrom. Fig. 11 zeigt dabei eine "Sofort-Lesen"-Ausprägung des ersten Datenübertragungsmodus, mit einer Synchronisierung auf die fallende Flanke des Datenanforderungssignals bzw. Synchronsignals, bei der die Nutzdaten direkt nach dem Datenanforderungssignal eingelesen werden.

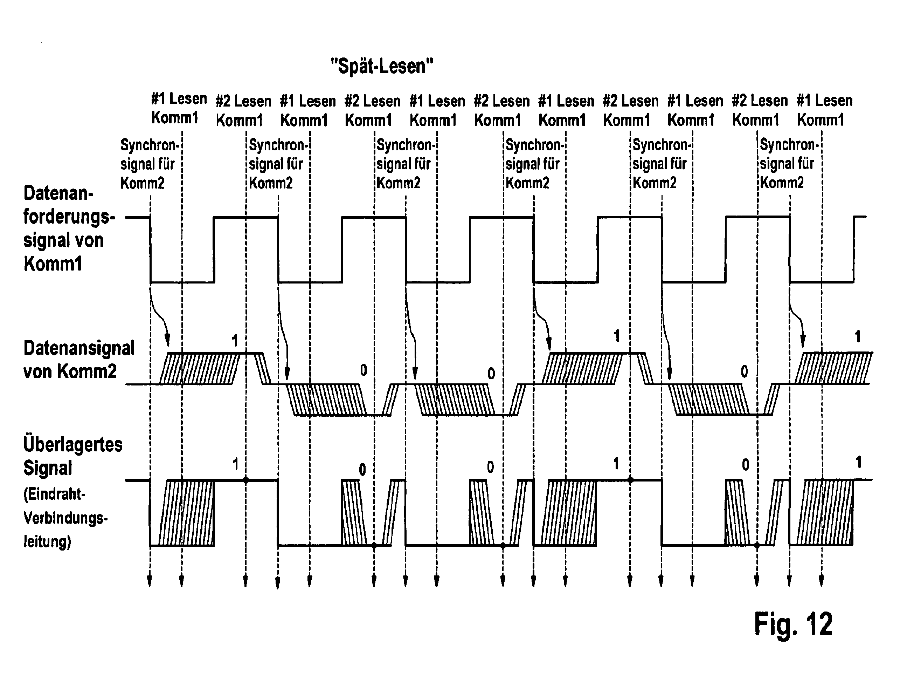

Fig. 12 zeigt eine "Spät-Lesen"-Ausprägung des ersten Datenübertragungsmodus, mit einer Synchronisierung auf die fallende Flanke des Datenanforderungssignals bzw. des Synchronsignals, bei der die Nutzdaten erst kurz vor dem nächsten Synchronsignal eingelesen werden. Somit besteht die Möglichkeit die Nutzdaten länger einschwingen zu lassen, um stabilere Signalpegel zu erreichen.

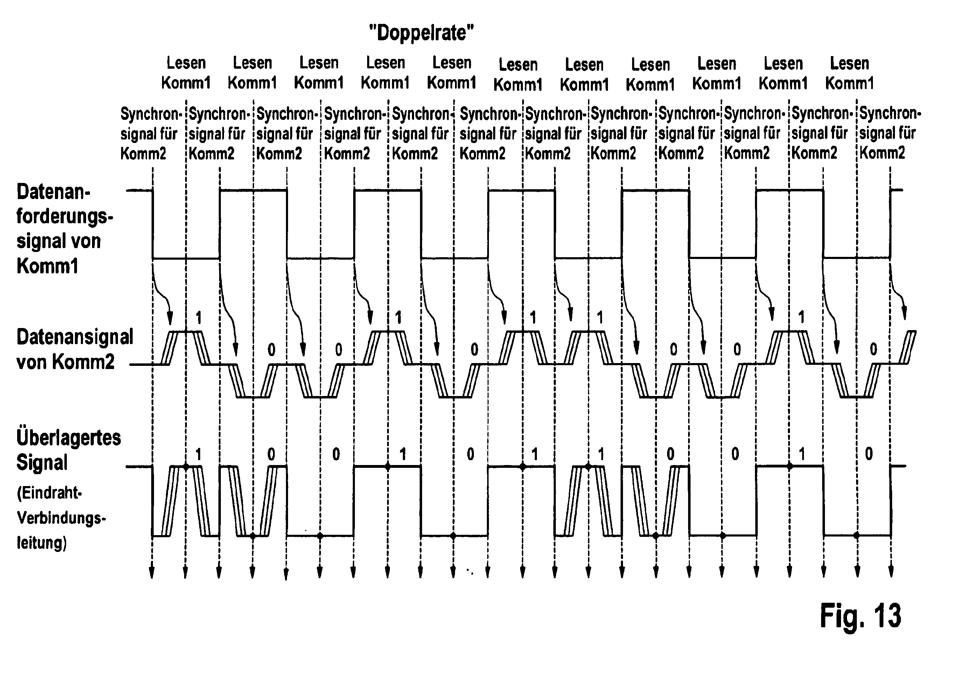

Fig. 13 zeigt eine "Doppelraten"-Ausprägung des ersten Datenübertragungsmodus, bei der die Nutzdaten von Komm2 sowohl von der fallenden als auch von der steigenden Flanke des Komm1-Synchronsignals angefordert werden. Hierbei ist im Gegensatz zur den beiden Ausprägungen gemäß Fig. 11 und 12 eine höhere Datenübertragungsrate bei geringerer "serial-peripheral-interface"-Datentiefe möglich, da bei jedem Lesezyklus eine neue Nutzdateninformation übertragen wird.

In weiteren nicht dargestellten, alternativen Ausprägungen ist die Synchronisation für Komm2 auch bei jeder n-ten Datenanforderungssignal- bzw. Synchronsignal-Flanke aber auch pegelgesteuert möglich. Weiterhin ist auch jeder m-te Lesezyklus zum Einlesen der Nutzdaten denkbar.

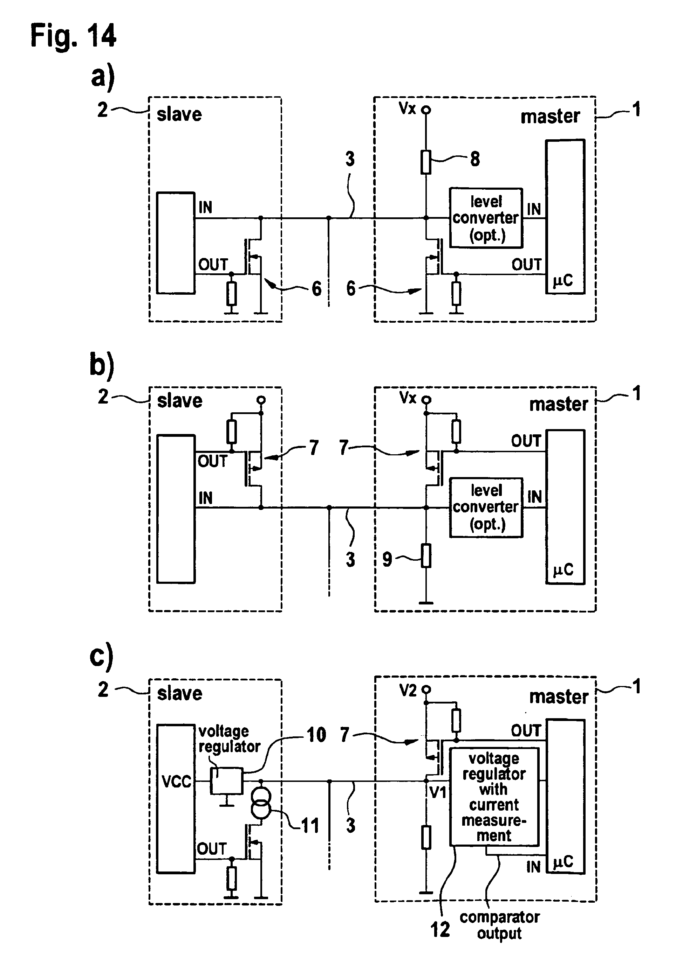

Fig. 14 a) bis c) zeigt beispielhafte Ausbildungen des Kommunikationssystems mit ersten Kommunikationseinheit bzw. Mastereinheit 1 und zweiter Kommunikationseinheit bzw. erster Slaveeinheit 2, welche über erste Datenleitung 3, OSPI miteinander verbunden sind.

Wired-AND Kommunikation (Fig. 14 a); wired-OR Kommunikation (Fig. 14 b):
Mastereinheit 1 und Slaveeinheit 2 sind direkt mit erster Datenleitung 3 verbunden, die Ausgangsstufen 6, 7 bzw. Low-Side-Treiber 6 treiben dabei allerdings nur den "Low"-Pegel (wired AND Kommunikation) bzw. High-Side-Treiber 7 den "High"-Pegel (wired-OR Kommunikation) aktiv. Damit können gegenüber der Realisierung mit Widerstandskopplung deutlich höhere Signalpegel für die Kommunikation genutzt werden. Mit der Dimensionierung der Pull-up- 8 bzw. Pull-down- 9 Widerstände (und der Treiber-Transistoren) kann durch Einstellen der Flankensteilheit bei der Signalübertragung ein solches Interface in deutlich größerem Maße bzgl. der Erfordernisse der Anwendung optimiert werden, beispielsweise bezüglich der Übertragungsrate und der EMV.

Eine in Fig. 14 c) dargestelltes alternatives Ausführungsbeispiel stellt eine Kommunikation über eine Schnittstelle dar, bei der die elektrischen Signale der ersten Kommunikationseinheit bzw. Mastereinheit 1 als Spannung und die elektrischen Signale der zweiten Kommunikationseinheit bzw. ersten Slaveeinheit 2 als Strom auf die Energie-Versorgung der Slaveeinheit über erste Datenleitung 3 und noch eine nicht dargestellte zusätzliche Leitung aufgeprägt werden. Diese ermöglicht die gemeinsame Nutzung der ersten Datenleitung als Versorgungsleitung und Datenübertragungsleitung/Taktleitung. Slaveeinheit 2 umfasst zu diesem Zweck eine Spannungsregelungseinheit 10 und eine Stromquelleneinheit 11 zur Aufprägung des Datensignals auf die erste Datenleitung 3. Mastereinheit 1 umfasst beispielgemäß einen High-Side-Treiber 7 sowie eine Spannungsregelungseinheit 12 mit integrierter Strommesseinheit, die eine Komparatoreinheit umfasst.

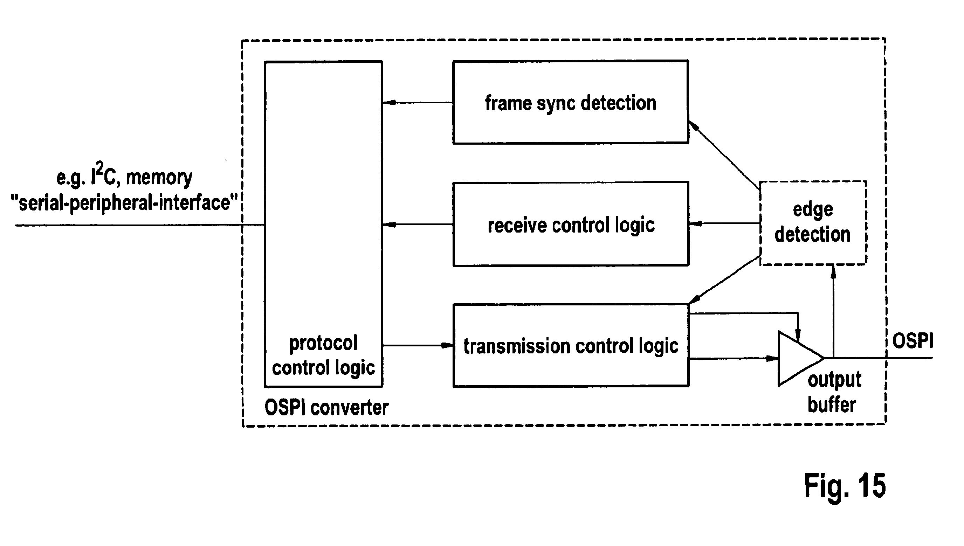

Fig. 15 zeigt das Blockschaltbild eines beispielhaften Konverters OSPI converter für die Implementierung einer Slaveeinheit in das elektronische Kommunikationssystem. Dargestellt ist ein Konverter, der auf Seiten der Slaveeinheit für die bisher beschriebenen Übertragungsprinzipien der Einzel-Datenleitungsübertragung die Schnittstellensignale anderer sekundärer Schnittstellen, z.B. "serial-peripheral-interface", I2C, Speicherschnittstellen, für die Übertragung über die erste Datenleitung als einzige Datenleitung umsetzt.

Hierbei wird die für den Datenübertragungsmodus X (Slave-Sende-Datenübertragungsmodus oder Master-Sende-Datenübertragungsmodus) benötigte Grundfunktionen der bitweisen Übertragung der Datensignale der Slaveeinheit bzw. des Slave-Datenstroms mit Synchronisierung auf das Datenanforderungssignal der Mastereinheit inklusive der zeitlichen Steuerung des Ausgangstreibers durch einen Sende-Logik-Block (transmission control logic) realisiert.

Eine hier optional dargestellte Funktionseinheit (edge detection) übernimmt die Erkennung von gültigen Flanken des OSPI-Signals enschließlich der Realisierung möglicher Filterfunktionen.

Wird der optionale zweite Datenübertragungsmodus Y (Master sendet Daten und "Takt") umgesetzt, wird eine Funktionseinheit (receive control logic) benötgt, die aus dem OSPI-Signalverlauf die vom Master gesendeten Daten decodiert.

Die bei der optionalen Umsetzung zur Erkennung eines Synchronisationspakets erforderlichen Maßnahmen werden durch eine weitere Funktionseinheit (frame sync detection) realisiert.

Die von der Protokolldefinition abhängigen Funktionen inclusive der Ansteuerung der sekundären Schnittstelle(n) werden in einer "übergeordneten" Einheit (protocol control logic) umgesetzt.

## Patentansprüche

1. Elektronisches Kommunikationssystem, umfassend wenigstens eine erste und eine zweite Kommunikationseinheit (1, 2), die mittels zumindest einer ersten Datenleitung (3) miteinander verbunden sind, wobei das Kommunikationssystem ein Datenübertragungsprotokoll aufweist, gemäß welchem in zumindest einem ersten Datenübertragungsmodus zur synchronen Datenübertragung die erste Kommunikationseinheit (1) mindestens einmal ein Taktsignal über die erste Datenleitung (3) an die zweite Kommunikationseinheit (2) überträgt und wobei das Datenübertragungsprotokoll so ausgebildet ist, dass ein Datensignal der zweiten Kommunikationseinheit (2) bezüglich des ersten Datenübertragungsmodus genau ein Bit umfasst,
**dadurch gekennzeichnet, dass** die zweite Kommunikationseinheit (2) das Datensignal als Antwort auf das Taktsignal über die erste Datenleitung (3) an die erste Kommunikationseinheit (1) überträgt, wobei eine steigende und/oder fallende Flanke des Taktsignals der zweiten Kommunikationseinheit einen Sendebefehl gibt und dass das Datenübertragungsprotokoll zumindest bezüglich des ersten Datenübertragungsmodus so ausgebildet ist dass das Datensignal als Ausgangssignal der zweiten Kommunikationseinheit (2) und das Taktsignal der ersten Kommunikationseinheit (1) auf der ersten Datenleitung (3) überlagert werden oder dass das Datensignal der zweiten Kommunikationseinheit (2) das Taktsignal der ersten Kommunikationseinheit (1) auf der ersten Datenleitung (3) übersteuert, wobei das Datensignal den Signalwert auf der ersten Datenleitung bestimmt.

2. Kommunikationssystem nach Anspruch 1, **dadurch gekennzeichnet, dass** das Datenübertragungsprotokoll bezüglich des ersten Datenübertragungsmodus so ausgebildet ist, dass eine Botschaft (message, DATA), welche insbesondere wenigstens eine definierte, separat interpretierbare Information umfasst, der zweiten Kommunikationseinheit (2) an die erste Kommunikationseinheit (1) mehrere Datensignale umfasst.

3. Kommunikationssystem nach Anspruch 1 oder 2, **dadurch gekennzeichnet, dass** das Datenübertragungsprotokoll zumindest bezüglich des ersten Datenübertragungsmodus so ausgebildet ist, dass das Taktsignal der ersten Kommunikationseinheit (1) und das Datensignal der zweiten Kommunikationseinheit (2) im Wesentlichen gleichzeitig über die erste Datenleitung (3) übertragen werden.

4. Kommunikationssystem nach mindestens einem der Ansprüche 1 bis 3, **dadurch gekennzeichnet, dass** die erste Kommunikationseinheit (1) und zumindest die zweite Kommunikationseinheit (2) über eine zusätzliche Masseleitung und/oder über eine zusätzliche Energieversorgungsleitung miteinander verbunden sind.

5. Kommunikationssystem nach mindestens einem der Ansprüche 1 bis 4, **dadurch gekennzeichnet, dass** wenigstens die zweite Kommunikationseinheit (2) keine eigene Taktgebereinheit aufweist oder sie weist eine Taktgebereinheit auf, welche nicht synchron zu einer Taktgebereinheit der ersten Kommunikationseinheit (1) arbeitet.

6. Kommunikationssystem nach mindestens einem der Ansprüche 1 bis 5, **dadurch gekennzeichnet, dass** die zweite Kommunikationseinheit (2) so ausgebildet ist, dass ihre Antwortzeit auf das Taktsignal der ersten Kommunikationseinheit (1) innerhalb eines definierten Zeitintervalls liegt, welches insbesondere kleiner ist als die Periodendauer oder ein Vielfaches der Periodendauer des Taktsignals der ersten Kommunikationseinheit und/oder des Takts der Taktgebereinheit der ersten Kommunikationseinheit.

7. Kommunikationssystem nach Anspruch 6, **dadurch gekennzeichnet, dass** die erste Kommunikationseinheit zwei Datenanschlüsse (SIMO, SOMI) aufweist, von denen ein Datenanschluss (SIMO, SOMI) als Dateneingang und ein Datenanschluss (SIMO, SOMI) als Datenausgang betrieben wird, wobei die Datenanschlüsse (SIMO, SOMI) synchron zueinander betrieben werden.

8. Kommunikationssystem nach mindestens einem der Ansprüche 1 bis 7, **dadurch gekennzeichnet, dass** das Datenübertragungsprotokoll so ausgebildet ist, dass ein, insbesondere jeweiliger, definierter Kommunikationsvorgang das Übertragen eines Synchronisationspakets (frame sync) und/oder eines Identifikationspakets (ID) und/oder eines Kommandopakets (CMD) und/oder eines Adresspakets (ADDR) von der ersten Kommunikationseinheit (1) an zumindest die zweite Kommunikationseinheit (2) über die erste Datenleitung (3) umfasst.

9. Kommunikationssystem nach mindestens einem der Ansprüche 1 bis 8, **dadurch gekennzeichnet, dass** die erste Kommunikationseinheit (1) und/oder die zweite Kommunikationseinheit (2) eine Push-Pull-Stufe mit einem High-Side-Treiber (7) und einem Low-Side-Treiber (6) aufweisen oder einen High-Side-Treiber (7) mit einem optionalen Pull-Down-Widerstand (9) oder einen Low-Side-Treiber (6) mit einem optionalen Pull-Up-Widerstand (8).

10. Kommunikationssystem nach mindestens einem der Ansprüche 1 bis 9, **dadurch gekennzeichnet, dass** die erste und wenigstens die zweite Kommunikationseinheit (1, 2) sowie das Datenübertragungsprotokoll so ausgebildet sind, dass das Datensignal und/oder das Taktsignal über definierte Strom- und/oder Spannungswerte oder durch optische Datenübertragung auf der ersten Datenleitung (3) übertragen werden.

11. Kommunikationssystem nach Anspruch 10, **dadurch gekennzeichnet, dass** das Datensignal und/oder das Taktsignal mittels einer definierten Signalform, umfassend mindestens eine definierte Signalflanke und/oder wenigstens einen Signalimpuls und/oder zumindest eine Signalimpulspause, codiert sind.

12. Kommunikationssystem nach mindestens einem der Ansprüche 1 bis 11, **dadurch gekennzeichnet, dass** die erste Kommunikationseinheit (1) als Mastereinheit und die zweite Kommunikationseinheit (2) als Slaveeinheit ausgebildet sind und insbesondere das Datenübertragungsprotokoll so ausgebildet ist, dass der erste Datenübertragungsmodus als Slave-Sende-Datenübertragungsmodus ausgelegt ist und/oder der zweite Datenübertragungsmodus als Master-Sende-Datenübertragungsmodus.

13. Kommunikationssystem nach mindestens einem der Ansprüche 1 bis 12, **dadurch gekennzeichnet, dass** die erste Kommunikationseinheit (1) mit wenigstens der zweiten Kommunikationseinheit (2) über eine Zwei-Draht-Schnittstelle verbunden ist, über welche unidirektional oder bidirektional Informationen, insbesondere stromcodiert, übertragen werden, und dabei zumindest die zweite Kommunikationseinheit über diese Zwei-Draht-Schnittstelle mit elektrischer Energie versorgt wird.

14. Kommunikationssystem nach mindestens einem der Ansprüche 1 bis 13, **dadurch gekennzeichnet, dass** mindestens die zweite Kommunikationseinheit (2) so ausgebildet ist, dass sie ein Identifikationspaket (ID) und/oder ein Kommandopaket (CMD) und/oder ein Adresspaket (ADDR) und/oder ein Endungspaket (TRAIL) der ersten Kommunikationseinheit (1) empfangen und selbstständig interpretieren kann.

15. Kommunikationssystem nach mindestens einem der Ansprüche 1 bis 14, **dadurch gekennzeichnet, dass** die zweite Kommunikationseinheit (2) in eine Sensor- und/oder Aktoreinheit integriert ist.

16. Verfahren zur Datenübertragung zwischen zumindest einer ersten Kommunikationseinheit (1) und wenigstens einer zweiten Kommunikationseinheit (2), innerhalb eines Kommunikationssystems gemäß mindestens einem der Ansprüche 1 bis 15, wobei die erste Kommunikationseinheit (1) und die zweite Kommunikationseinheit (2) über mindestens eine erste Datenleitung (3) miteinander verbunden sind, wobei in zumindest einem ersten Datenübertragungsmodus zur synchronen Datenübertragung die erste Kommunikationseinheit (1) mindestens einmal ein Taktsignal über die erste Datenleitung (3) an die zweite Kommunikationseinheit (2) überträgt und wobei ein Datensignal der zweiten Kommunikationseinheit (2) bezüglich des ersten Datenübertragungsmodus genau ein Bit umfasst, **dadurch gekennzeichnet, dass** die zweite Kommunikationseinheit (2) das Datensignal als Antwort auf das Taktsignal über die erste Datenleitung (3) an die erste Kommunikationseinheit (1) überträgt, wobei eine steigende und/oder fallende Flanke des Taktsignals der zweiten Kommunikationseinheit einen Sendebefehl gibt und dass das Datenübertragungsprotokoll zumindest bezüglich des ersten Datenübertragungsmodus so ausgebildet ist, dass das Datensignal als Ausgangssignal der zweiten Kommunikationseinheit (2) und das Taktsignal der ersten Kommunikationseinheit (1) auf der ersten Datenleitung (3) überlagert werden oder dass das Datensignal der zweiten Kommunikationseinheit (2) das Taktsignal der ersten Kommunikationseinheit (1) auf der ersten Datenleitung (3) übersteuert, wobei das Datensignal den Signalwert auf der ersten Datenleitung bestimmt.

17. Verfahren nach Anspruch 16, **dadurch gekennzeichnet, dass** zumindest bezüglich des ersten Datenübertragungsmodus das Taktsignal der ersten Kommunikationseinheit (1) und das Datensignal der zweiten Kommunikationseinheit (2) im Wesentlichen gleichzeitig über die erste Datenleitung (3) übertragen werden.

18. Verfahren nach Anspruch 16 oder 17, **dadurch gekennzeichnet, dass** die zweite Kommunikationseinheit (2) das Datensignal als Antwort auf das Taktsignal der ersten Kommunikationseinheit (1) innerhalb eines definierten Zeitintervalls sendet, welches insbesondere kleiner ist als die Periodendauer oder ein Vielfaches der Periodendauer des Taktsignals der ersten Kommunikationseinheit und/oder des Takts einer Taktgebereinheit der ersten Kommunikationseinheit.

19. Verfahren nach mindestens einem der Ansprüche 16 bis 18, **dadurch gekennzeichnet, dass** die erste Kommunikationseinheit (1) zu Beginn eines definierten, insbesondere in sich abgeschlossenen, Kommunikationsvorgangs mit zumindest der zweiten Kommunikationseinheit (2) ein Synchronisationspaket (frame sync) über die erste Datenleitung (3) wenigstens an die zweite Kommunikationseinheit (2) überträgt.

20. Verfahren nach mindestens einem der Ansprüche 16 bis 19, **dadurch gekennzeichnet, dass** in einem definierten Kommunikationsvorgang, insbesondere anschließend, ein Synchronisationspaket (frame sync) und/oder ein Identifikationspaket (ID) und/oder ein Kommandopaket (CMD) und/oder ein Adresspaket (ADDR) von der ersten Kommunikationseinheit (1) an zumindest die zweite Kommunikationseinheit (2) über die erste Datenleitung (3) übertragen wird.

21. Verfahren nach Anspruch 19 oder 20, **dadurch gekennzeichnet, dass** in einem definierten Kommunikationsvorgang zusätzlich, insbesondere anschließend, eine Botschaft (message, DATA) von der ersten Kommunikationseinheit (1) an die zweite Kommunikationseinheit (2) gemäß dem zweiten Datenübertragungsmodus und/oder eine Botschaft (message, DATA) von der zweiten Kommunikationseinheit (2) an die erste Kommunikationseinheit (1), gemäß dem ersten Datenübertragungsmodus, über die erste Datenleitung (3) übertragen wird.

22. Verfahren nach mindestens einem der Ansprüche 19 bis 21, **dadurch gekennzeichnet, dass** das Synchronisationspaket (frame sync) ein eindeutig identifizierbares Startblocksignal umfasst, welches insbesondere eine Start-Impulspause (L) definierter Länge und einen Start-Impuls (H) definierter Länge aufweist und/oder ein Start-Impuls-Start-Impulspausen-Signal aufweist, wobei das Zeitdauerverhältnis (L:H) von Start-Impuls zu Start-Impulspause eine definierte, insbesondere eindeutig identifizierbare, Größe aufweist und/oder welches eine eindeutig identifizierbare Folge von Start-Impulsen und Start-Impulspausen mit jeweils definierter Dauer aufweist.

23. Verfahren nach Anspruch 22, **dadurch gekennzeichnet, dass** wenigstens die zweite Kommunikationseinheit (2) aus dem eindeutig identifizierbaren Startblocksignal eine Taktreferenzgröße ermittelt und insbesondere anschließend mittels der Taktreferenzgröße eine Anpassung des eigenen definierten Taktsignal-Antwortsignal-Zeitintervalls durchführt.

24. Verfahren nach mindestens einem der Ansprüche 16 bis 23 wobei das Kommunikationssystem in einem Kraftfahrzeug verwendet wird.

## Claims

1. Electronic communication system, comprising at least one first and one second communication unit (1, 2) which are connected to one another by means of at least one first data line (3), wherein the communication system has a data transmission protocol according to which, in at least one first data transmission mode for synchronous data transmission, the first communication unit (1) transmits a clock signal to the second communication unit (2) via the first data line (3) at least once and wherein the data transmission protocol is in a form such that a data signal from the second communication unit (2) comprises precisely one bit for the first data transmission mode, **characterized in that** the second communication unit (2) transmits the data signal to the first communication unit (1) via the first data line (3) in response to the clock signal, wherein a rising and/or falling edge of the clock signal from the second communication unit provides a transmission command and the data transmission protocol is in a form at least for the first data transmission mode such that the data signal as output signal from the second communication unit (2) and the clock signal from the first communication unit (1) on the first data line (3) are overlaid or that the data signal from the second communication unit (2) overdrives the clock signal from the first communication unit (1) on the first data line (3), wherein the data signal determines the signal value on the first data line.

2. Communication system according to Claim 1, **characterized in that** the data transmission protocol is in a form for the first data transmission mode such that a message (message, DATA), which in particular comprises at least one defined, separately interpretable information item, from the second communication unit (2) to the first communication unit (1) comprises a plurality of data signals.

3. Communication system according to Claim 1 or 2, **characterized in that** the data transmission protocol is in a form at least for the first data transmission mode such that the clock signal from the first communication unit (1) and the data signal from the second communication unit (2) are transmitted essentially simultaneously via the first data line (3).

4. Communication system according to at least one of Claims 1 to 3, **characterized in that** the first communication unit (1) and at least the second communication unit (2) are connected to one another by means of an additional ground line and/or by means of an additional power supply line.

5. Communication system according to at least one of Claims 1 to 4, **characterized in that** at least the second communication unit (2) does not have a clock generator unit of its own or it has a clock generator unit which does not operate in sync with a clock generator unit of the first communication unit (1).

6. Communication system according to at least one of Claims 1 to 5, **characterized in that** the second communication unit (2) is in a form such that its response time for the clock signal from the first communication unit (1) is within a defined time interval which, in particular, is smaller than the period duration or a multiple of the period duration of the clock signal from the first communication unit and/or of the clock from the clock generator unit of the first communication unit.

7. Communication system according to Claim 6, **characterized in that** the first communication unit has two data connections (SIMO, SOMI), of which one data connection (SIMO, SOMI) is operated as a data input and one data connection (SIMO, SOMI) is operated as a data output, wherein the data connections (SIMO, SOMI) are operated in sync with one another.

8. Communication system according to at least one of Claims 1 to 7, **characterized in that** the data transmission protocol is in a form such that a, in particular respective, defined communication process comprises the transmission of a synchronization packet (frame sync) and/or of an identification packet (ID) and/or of a command packet (CMD) and/or of an address packet (ADDR) from the first communication unit (1) to at least the second communication unit (2) via the first data line (3).

9. Communication system according to at least one of Claims 1 to 8, **characterized in that** the first communication unit (1) and/or the second communication unit (2) have a push-pull stage with a high side driver (7) and a low side driver (6) or have a high side driver (7) with an optional pull down resistor (9) or a low side driver (6) with an optional pull up resistor (8).

10. Communication system according to at least one of Claims 1 to 9, **characterized in that** the first and at least the second communication unit (1, 2) and also the data transmission protocol are in a form such that the data signal and/or the clock signal are transmitted using defined current and/or voltage values or by means of optical data transmission on the first data line (3).

11. Communication system according to Claim 10, **characterized in that** the data signal and/or the clock signal are encoded by means of a defined signal form, comprising at least one defined signal edge and/or at least one signal pulse and/or at least one signal pulse pause.

12. Communication system according to at least one of Claims 1 to 11, **characterized in that** the first communication unit (1) is in the form of a master unit and the second communication unit (2) is in the form of a slave unit and, in particular, the data transmission protocol is in a form such that the first data transmission mode is designed as a slave send data transmission mode and/or the second data transmission mode is designed as a master send data transmission mode.

13. Communication system according to at least one of Claims 1 to 12, **characterized in that** the first communication unit (1) is connected to at least the second communication unit (2) by means of a two-wire interface which is used to transmit information, particularly in current-encoded form, unidirectionally or bidirectionally, and this involves at least the second communication unit being supplied with electrical power via said two-wire interface.

14. Communication system according to at least one of Claims 1 to 13, **characterized in that** at least the second communication unit (2) is in a form such that it can receive and independently interpret an identification packet (ID) and/or a command packet (CMD) and/or an address packet (ADDR) and/or an ending packet (TRAIL) from the first communication unit (1).

15. Communication system according to at least one of Claims 1 to 14, **characterized in that** the second communication unit (2) is integrated in a sensor and/or actuator unit.

16. Method for data transmission between at least one first communication unit (1) and at least one second communication unit (2), within a communication system according to at least one of Claims 1 to 15, wherein the first communication unit (1) and the second communication unit (2) are connected to one another by means of at least one first data line (3), wherein, in at least one first data transmission mode for synchronous data transmission, the first communication unit (1) transmits a clock signal to the second communication unit (2) via the first data line (3) at least once and wherein a data signal from the second communication unit (2) comprises precisely one bit for the first data transmission mode, **characterized in that** the second communication unit (2) transmits the data signal to the first communication unit (1) via the first data line (3) in response to the clock signal, wherein a rising and/or falling edge of the clock signal from the second communication unit provides a transmission command and the data transmission protocol is in a form at least for the first data transmission mode such that the data signal as output signal from the second communication unit (2) and the clock signal from the first communication unit (1) on the first data line (3) are overlaid or that the data signal from the second communication unit (2) overdrives the clock signal from the first communication unit (1) on the first data line (3), wherein the data signal determines the signal value on the first data line.

17. Method according to Claim 16, **characterized in that** at least for the first data transmission mode the clock signal from the first communication unit (1) and the data signal from the second communication unit (2) are transmitted essentially simultaneously via the first data line (3).

18. Method according to Claim 16 or 17, **characterized in that** the second communication unit (2) sends the data signal in response to the clock signal from the first communication unit (1) within a defined time interval which, in particular, is smaller than the period duration or a multiple of the period duration of the clock signal from the first communication unit and/or of the clock from a clock generator unit of the first communication unit.

19. Method according to at least one of Claims 16 to 18, **characterized in that** the first communication unit (1) transmits a synchronization packet (frame sync) at least to the second communication unit (2) via the first data line (3) at the beginning of a defined, in particular self-contained, communication process with at least the second communication unit (2).

20. Method according to at least one of Claims 16 to 19, **characterized in that** in a defined communication process, in particular subsequently, a synchronization packet (frame sync) and/or an identification packet (ID) and/or a command packet (CMD) and/or an address packet (ADDR) is transmitted from the first communication unit (1) to at least the second communication unit (2) via the first data line (3).

21. Method according to Claim 19 or 20, **characterized in that** in a defined communication process additionally, in particular subsequently, a message (message, DATA) is transmitted from the first communication unit (1) to the second communication unit (2) in accordance with the second data transmission mode and/or a message (message, DATA) is transmitted from the second communication unit (2) to the first communication unit (1), in accordance with the first data transmission mode, via the first data line (3).

22. Method according to at least one of Claims 19 to 21, **characterized in that** the synchronization packet (frame sync) comprises an explicitly identifiable starting block signal which, in particular, has a starting pulse pause (L) of defined length and a starting pulse (H) of defined length and/or has a starting pulse/starting pulse pause signal, wherein the duration ratio (L:H) of the starting pulse to the starting pulse pause has a defined, in particular explicitly identifiable, magnitude and/or which has an explicitly identifiable sequence of starting pulses and starting pulse pauses with a respectively defined duration.

23. Method according to Claim 22, **characterized in that** at least the second communication unit (2) ascertains a clock reference variable from the explicitly identifiable starting block signal and, in particular subsequently, uses the clock reference variable to customize its own defined clock signal response signal time interval.

24. Method according to at least one of Claims 16 to 23, wherein the communication system is used in a motor vehicle.

## Revendications

1. Système de communication électronique, comprenant au moins une première et une deuxième unité de communication (1, 2) qui sont reliées entre elles par l'intermédiaire d'au moins une première ligne de données (3), le système de communication possédant un protocole de transmission de données selon lequel, dans au moins un premier mode de transmission de données servant à la transmission de données synchrones, la première unité de communication (1) transmet au moins une fois un signal d'horloge à la deuxième unité de communication (2) par le biais de la première ligne de données (3) et le protocole de transmission de données étant configuré de telle sorte qu'un signal de données de la deuxième unité de communication (2), pour ce qui concerne le premier mode de transmission de données, comprend exactement un bit,
**caractérisé en ce que** la deuxième unité de communication (2) transmet le signal de données en tant que réponse au signal d'horloge à la première unité de communication (1) par le biais de la première ligne de données (3), le front montant et/ou descendant du signal d'horloge de la deuxième unité de communication donnant une instruction d'émission, et **en ce que** le protocole de transmission de données, au moins pour ce qui concerne le premier mode de transmission de données, est configuré de telle sorte que le signal de données en tant que signal de sortie de la deuxième unité de communication (2) et le signal d'horloge de la première unité de communication (1) sont superposés sur la première ligne de données (3), ou **en ce que** le signal de données de la deuxième unité de communication (2) surmodule le signal d'horloge de la première unité de communication (1) sur la première ligne de données (3), le signal de données déterminant la valeur du signal sur la première ligne de données.

2. Système de communication selon la revendication 1, **caractérisé en ce que** le protocole de transmission de données, pour ce qui concerne le premier mode de transmission de données, est configuré de telle sorte qu'un message (message, données), qui comprend notamment au moins une information définie interprétable séparément, de la deuxième unité de communication (2) à la première unité de communication (1) comprend plusieurs signaux de données.

3. Système de communication selon la revendication 1 ou 2, **caractérisé en ce que** le protocole de transmission de données, au moins pour ce qui concerne le premier mode de transmission de données, est configuré de telle sorte que le signal d'horloge de la première unité de communication (1) et le signal de données de la deuxième unité de communication (2) sont transmis pour l'essentiel simultanément par le biais de la première ligne de données (3).

4. Système de communication selon au moins l'une des revendications 1 à 3, **caractérisé en ce que** la première unité de communication (1) et au moins la deuxième unité de communication (2) sont reliées entre elles par le biais d'une ligne de masse supplémentaire et/ou par le biais d'une ligne d'alimentation en énergie supplémentaire.

5. Système de communication selon au moins l'une des revendications 1 à 4, **caractérisé en ce qu'**au moins la deuxième unité de communication (2) ne possède par d'unité de génération d'horloge propre, ou elle possède une unité de génération d'horloge qui ne fonctionne pas de manière synchrone avec l'unité de génération d'horloge de la première unité de communication (1).

6. Système de communication selon au moins l'une des revendications 1 à 5, **caractérisé en ce que** la deuxième unité de communication (2) est configurée de telle sorte que son temps de réponse au signal d'horloge de la première unité de communication (1) se trouve à l'intérieur d'un intervalle de temps défini, lequel est notamment plus petit que la durée de la période ou un multiple de la durée de la période du signal d'horloge de la première unité de communication et/ou de l'horloge de l'unité de génération d'horloge de la première unité de communication.

7. Système de communication selon la revendication 6, **caractérisé en ce que** la première unité de communication possède deux connexions de données (SIMO, SOMI) dont une connexion de données (SIMO, SOMI) est utilisée comme entrée de données et une connexion de données (SIMO, SOMI) est utilisée comme sortie de donnes, les connexions de données (SIMO, SOMI) fonctionnant de manière synchrone l'une par rapport à l'autre.

8. Système de communication selon au moins l'une des revendications 1 à 7, **caractérisé en ce que** le protocole de transmission de données est configuré de telle sorte qu'une opération de communication définie, notamment respective, comprend la transmission d'un paquet de synchronisation (frame sync) et/ou d'un paquet d'identification (ID) et/ou d'un paquet de commande (CMD) et/ou d'un paquet d'adresse (ADDR) de la première unité de communication (1) à au moins la deuxième unité de communication (2) par le biais de la première ligne de données (3).

9. Système de communication selon au moins l'une des revendications 1 à 8, **caractérisé en ce que** la première unité de communication (1) et/ou la deuxième unité de communication (2) possèdent un étage Push-Pull doté d'un circuit d'attaque côté haut (7) et d'un circuit d'attaque côté bas (6), ou d'un circuit d'attaque côté haut (7) avec une résistance de tirage au négatif (9) optionnelle ou d'un circuit d'attaque côté bas (6) avec une résistance de tirage au positif (8) optionnelle.

10. Système de communication selon au moins l'une des revendications 1 à 9, **caractérisé en ce que** la première et au moins la deuxième unité de communication (1, 2) ainsi que le protocole de transmission de données sont configurés de telle sorte que le signal de données et/ou le signal d'horloge sont transmis par des valeurs définies du courant et/ou de la tension ou par transmission de données optiques sur la première ligne de données (3).

11. Système de communication selon la revendication 10, **caractérisé en ce que** le signal de données et/ou le signal d'horloge sont codés par l'intermédiaire d'une forme de signal définie, comprenant au moins un front de signal défini et/ou au moins une impulsion de signal et/ou au moins une pause d'impulsion de signal.

12. Système de communication selon au moins l'une des revendications 1 à 11, **caractérisé en ce que** la première unité de communication (1) est configurée en tant qu'unité maître et la deuxième unité de communication (2) en tant qu'unité esclave et le protocole de transmission de données est notamment configuré de telle sorte que le premier mode de transmission de données est conçu comme un mode de transmission de données d'émission par l'esclave et/ou le deuxième mode de transmission de données comme un mode de transmission de données d'émission par le maître.

13. Système de communication selon au moins l'une des revendications 1 à 12, **caractérisé en ce que** la première unité de communication (1) est reliée au moins à la deuxième unité de communication (2) par le biais d'une interface à deux fils par le biais de laquelle sont transmises des informations unidirectionnelles ou bidirectionnelles, notamment codées en courant, et au moins la deuxième unité de communication est ici alimentée en énergie électrique par le biais de cette interface à deux fils.

14. Système de communication selon au moins l'une des revendications 1 à 13, **caractérisé en ce qu'**au moins la deuxième unité de communication (2) est configurée de telle sorte qu'elle reçoit un paquet d'identification (ID) et/ou un paquet de commande (CMD) et/ou un paquet d'adresse (ADDR) et/ou un paquet de terminaison (TRAIL) de la première unité de communication (1) et peut l'interpréter de manière autonome.

15. Système de communication selon au moins l'une des revendications 1 à 14, **caractérisé en ce que** la deuxième unité de communication (2) est intégrée dans une unité de détecteur et/ou d'actionneur.

16. Procédé de transmission de données entre au moins une première unité de communication (1) et au moins une deuxième unité de communication (2) à l'intérieur d'un système de communication selon au moins l'une des revendications 1 à 15, la première unité de communication (1) et la deuxième unité de communication (2) étant reliées entre elles par l'intermédiaire d'au moins une première ligne de données (3), dans au moins un premier mode de transmission de données servant à la transmission de données synchrones, la première unité de communication (1) transmettant au moins une fois un signal d'horloge à la deuxième unité de communication (2) par le biais de la première ligne de données (3) et un signal de données de la deuxième unité de communication (2), pour ce qui concerne le premier mode de transmission de données, comprenant exactement un bit,
**caractérisé en ce que** la deuxième unité de communication (2) transmet le signal de données en tant que réponse au signal d'horloge à la première unité de communication (1) par le biais de la première ligne de données (3), un front montant et/ou descendant du signal d'horloge de la deuxième unité de communication donnant une instruction d'émission et **en ce que** le protocole de transmission de données, au moins pour ce qui concerne le premier mode de transmission de données, est configuré de telle sorte que le signal de données en tant que signal de sortie de la deuxième unité de communication (2) et le signal d'horloge de la première unité de communication (1) sont superposés sur la première ligne de données (3), ou **en ce que** le signal de données de la deuxième unité de communication (2) surmodule le signal d'horloge de la première unité de communication (1) sur la première ligne de données (3), le signal de données déterminant la valeur du signal sur la première ligne de données.

17. Procédé selon la revendication 16, **caractérisé en ce que**, au moins pour ce qui concerne le premier mode de transmission de données, le signal d'horloge de la première unité de communication (1) et le signal de données de la deuxième unité de communication (2) sont transmis pour l'essentiel simultanément par le biais de la première ligne de données (3).

18. Procédé selon la revendication 16 ou 17, **caractérisé en ce que** la deuxième unité de communication (2) envoie le signal de données en tant que réponse au signal d'horloge à la première unité de communication (1) à l'intérieur d'un intervalle de temps défini, lequel est notamment plus petit que la durée de la période ou un multiple de la durée de la période du signal d'horloge de la première unité de communication et/ou de l'horloge de l'unité de génération d'horloge de la première unité de communication.

19. Procédé selon au moins l'une des revendications 16 à 18, **caractérisé en ce que** la première unité de communication (1), au début d'une opération de communication définie, notamment terminée en elle-même, avec au moins la deuxième unité de communication (2) transmet un paquet de synchronisation (frame sync) à au moins la deuxième unité de communication (2) par le biais de la première ligne de données (3).

20. Procédé selon au moins l'une des revendications 16 à 19, **caractérisé en ce que** dans une opération de communication définie, notamment rattachée, un paquet de synchronisation (frame sync) et/ou un paquet d'identification (ID) et/ou un paquet de commande (CMD) et/ou un paquet d'adresse (ADDR) est transmis de la première unité de communication (1) à au moins la deuxième unité de communication (2) par le biais de la première ligne de données (3).

21. Procédé selon la revendication 19 ou 20, **caractérisé en ce que** dans une opération de communication définie, notamment rattachée, un message (message, données) est transmis de la première unité de communication (1) à la deuxième unité de communication (2) conformément au deuxième mode de transmission de données et/ou un message (message, données) est transmis de la deuxième unité de communication (2) à la première unité de communication (1) conformément au deuxième mode de transmission de données, par le biais de la première ligne de données (3).

22. Procédé selon au moins l'une des revendications 19 à 21, **caractérisé en ce que** le paquet de synchronisation (frame sync) comprend un signal de bloc de départ identifiable explicitement, lequel possède notamment une pause d'impulsion de départ (L) de longueur définie et une impulsion de départ (H) de longueur définie et/ou un signal d'impulsion de départ - de pauses d'impulsion de départ, le rapport de durée (L:H) entre l'impulsion de départ et la pause d'impulsion de départ possédant une grandeur définie, notamment identifiable explicitement, et/ou lequel possède une séquence identifiable explicitement d'impulsions de départ et de pauses d'impulsion de départ ayant respectivement une durée définie.

23. Procédé selon la revendication 22, **caractérisé en ce qu'**au moins la deuxième unité de communication (2) détermine à partir du signal de bloc de départ identifiable explicitement une grandeur de référence d'horloge et effectue notamment à la suite, au moyen de la grandeur de référence d'horloge, une adaptation de l'intervalle de temps défini propre signal d'horloge - signal de réponse.

24. Procédé selon au moins l'une des revendications 16 à 23, selon lequel le système de communication est utilisé dans un véhicule automobile.
